# EUROPÄISCHE PATENTSCHRIFT

(11) **EP 3 964 977 B1**
(45) Veröffentlichungstag und Bekanntmachung des Hinweises auf die Patenterteilung: **22.04.2026**
(21) Anmeldenummer: 21192180.4
(22) Anmeldetag: 19.08.2021
(51) Int. Cl.: G06F 16/27, G06F 16/2455, G06F 21/62

(54) **CACHING VON DATENSÄTZEN IN EINEM VERTEILTEN DATENBANKSYSTEM**
CACHING OF DATA SETS IN A DISTRIBUTED DATABASE SYSTEM
MISE EN CACHE DES ENSEMBLES DE DONNÉES DANS UN SYSTÈME DE BASE DE DONNÉES DISTRIBUÉ

(30) Priorität: 21.08.2020 DE 102020121986
(43) Veröffentlichungstag der Anmeldung: 09.03.2022
(73) Patentinhaber: Bundesdruckerei GmbH, 10969 Berlin (DE)
(72) Erfinder: WILKE, Andreas, 13509 Berlin (DE); KOMAROV, Ilya, 13507 Berlin (DE)
(74) Vertreter: Richardt Patentanwälte PartG mbB

(56) Entgegenhaltungen:
- EP-A1- 3 683 684
- US-A- 5 924 094
- YANG CAIXIA ET AL: "AuthPrivacyChain: A Blockchain-Based Access Control Framework With Privacy Protection in Cloud", IEEE ACCESS, IEEE, USA, vol. 8, 6 April 2020 (2020-04-06), pages 70604 - 70615, XP011785065, [retrieved on 20200422], DOI: 10.1109/ACCESS.2020.2985762
- UGOBAME UCHIBEKE UCHI ET AL: "Blockchain Access Control Ecosystem for Big Data Security", 2018 IEEE INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 30 July 2018 (2018-07-30), pages 1373 - 1378, XP033556175, DOI: 10.1109/CYBERMATICS_2018.2018.00236
- SABRINA DE CAPITANI DI VIMERCATI ET AL: "Integrating trust management and access control in data-intensive Web applications", ACM TRANSACTIONS ON THE WEB (TWEB), vol. 6, no. 2, 1 May 2012 (2012-05-01), 2 Penn Plaza, Suite 701 New York NY 10121-0701 USA, pages 1 - 43, XP055446944, ISSN: 1559-1131, DOI: 10.1145/2180861.2180863

## Beschreibung

Die Erfindung betrifft ein Verfahren zum Erteilen einer Caching-Berechtigung zum Cachen eines Abbilds eines Datensatzes, welcher in einer Datenbank gespeichert ist und von dieser verwaltet wird, für eine weitere Datenbank, eine entsprechende Datenbank sowie ein verteiltes Datenbanksystem, welches die beiden Datenbanken umfasst.

Im Zuge der zunehmenden Digitalisierung, Automatisierung und Vernetzung in allen Lebens- und Arbeitsbereichen entstehen komplexe verteilte Systeme, deren technisches Zusammenspiel neue technische Herausforderungen aufwirft. So umfassen entsprechende verteilte Systeme im Allgemeinen beispielsweise keinen gemeinsamen Speicher, was ein Ausführen von Datenverarbeitungsfunktionen erschwert. Vielmehr kommt eine Mehrzahl von Speichern, wie etwa Datenbanken, zum Einsatz. Bei der Datenverarbeitung kann sich somit das Bedürfnis ergeben auf Datensätze, welche in unterschiedlichen Datenbanken gespeichert sind berücksichtigen zu wollen oder zu müssen. Andererseits besteht die Notwendigkeit Zugriff auf die entsprechende Datensätze zu beschränken, um eine ausreichende Datensicherheit gewährleisten zu können.

Die EP 3 683 684 A1 beschreibt eine Informationsverarbeitungsvorrichtung zur Verarbeitung eines wachsenden Umfang an Anfrageinformationen, ohne dabei eine Belastung eines Peer-to-Peer-Datenbanksystems zu erhöhen. Die Informationsverarbeitungsvorrichtung umfasst eine Erfassungseinheit, die von einer Peer-to-Peer-Datenbank bereitgestellte Daten auf der Grundlage von Anfrageinformationen erlangt, und eine Speichersteuereinheit, welche eine Speicherung der Daten steuert, die von einer Cache-Speichereinheit durchgeführt wird.

Der Artikel "AuthPrivacyChain: A Blockchain-Based Access Control Framework With Privacy Protection in Cloud" von Caixia Yang et al. in IEEE Access, Band 8, Seiten 70604 bis 70615, 27. April 2020, beschreibt ein Blockchain-basiertes Zugriffskontrollrahmenwerk mit Schutz der Privatsphäre namens AuthPrivacyChain. Kontoadresse eines Knotens in der Blockchain werden als Identität verwendet und gleichzeitig werden Zugriffskontrollberechtigungen für Daten in der Cloud definiert, die verschlüsselt und in der Blockchain gespeichert werden. Ferner werden in AuthPrivacyChain Prozesse für eine Zugriffskontrolle, eine Autorisierung und einen Widerruf von Berechtigungen definiert. Schließlich wird AuthPrivacyChain auf Basis eines Enterprise Operating System (EOS) implementiert. AuthPrivacyChain ist nicht nur in der Lage Hacker und Administratoren daran zu hindern, illegal auf Ressourcen zuzugreifen, sondern auch die Privatsphäre autorisierter Nutzer zu schützen.

Der Erfindung liegt die Aufgabe zugrunde, ein verbessertes Verfahren zum Ermöglichen von Zugriffen auf Datensätzen zwischen verschiedenen Datenbanken zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Erteilen einer Caching-Berechtigung zum Cachen eines Abbilds eines Datensatzes, welcher in einer ersten Datenbank gespeichert ist und von dieser verwaltet wird, für eine zweite Datenbank. Dem Datensatz ist eine Berechtigungsstruktur zugeordnet, in welche eingetragen ist, welche Nutzer der ersten Datenbank ein Caching-Recht zum Erteilen von Caching-Berechtigungen zum Cachen von Abbildern des Datensatzes besitzen. Das Verfahren umfasst:
- Empfangen einer Anfrage eines Nutzers der ersten Datenbank zum Ausstellen eines Caching-Berechtigungsnachweises durch die erste Datenbank für die zweite Datenbank, wobei der Caching-Berechtigungsnachweis eine Caching-Berechtigung der zweiten Datenbank zum Cachen eines Abbilds des Datensatzes nachweist,
- Prüfen der Berechtigungsstruktur des Datensatzes, ob für den anfragenden Nutzer ein Caching-Recht zum Erteilen von Caching-Berechtigungen in die Berechtigungsstruktur des Datensatzes eingetragen ist,
- auf eine erfolgreiche Prüfung hin, Erstellen des Caching-Berechtigungsnachweises für die zweite Datenbank, wobei der Caching-Berechtigungsnachweis eine Datensatz-ID des zu cachenden Datensatzes umfasst, eine Angabe der gewährten Caching-Berechtigung, eine Nutzer-ID des die Caching-Berechtigung erteilenden Nutzers und eine Datenbank-ID der zweiten Datenbank, welcher die Caching-Berechtigung erteilt wird, wobei der Caching-Berechtigungsnachweis von der ersten Datenbank signiert ist,
- Bereitstellen des Caching-Berechtigungsnachweises für die zweite Datenbank.

Ausführungsformen ermöglichen es, dass einer zweiten Datenbank ein Caching-Berechtigungsnachweis zum Cachen eines individuellen Datensatzes der ersten Datenbank zur Verfügung gestellt werden kann. Somit kann für einzelne Datensätze der ersten Datenbank individuell festgelegt werden, ob eine Caching-Berechtigung erteilt wird bzw. ob der entsprechende Datensatz für die zweite Datenbank zum Cachen freigegeben wird.

Die Datensatz-ID identifiziert eindeutig den zu cachenden Datensatz, für welchen eine Caching-Berechtigung erteilt wird. Aus der Angabe der gewährten Caching-Berechtigung geht hervor, dass die Berechtigung auf ein Cachen des Datensatzes beschränkt ist. Der zweiten Datenbank wird somit beispielsweise ein Nutzungsrecht des Datensatzes gewährt. Die zweite Datenbank ist nicht berechtigt den Datensatz zu ändern, d.h. das Cachen gewährt der zweiten Datenbank kein Schreibrecht für den entsprechenden Datensatz. Vielmehr handelt es sich bei dem Abbild des zweiten Datensatzes beispielsweise lediglich um eine Kopie des entsprechenden Datensatzes, welche den zustand des Datensatzes zum Zeitpunkt der Erstellung des Abbilds wiedergibt. Für den tatsächlichen Inhalt des Datensatzes ist beispielsweise ausschließlich die erste Datenbank verantwortlich, welche den Datensatz verwaltet. Mit anderen Worten kann der Datensatz beispielsweise nur in der ersten Datenbank geändert werden. Somit legt der Datensatz in der ersten Datenbank dessen Inhalt fest.

Das Cachen gewährt der zweiten Datenbank beispielsweise nur ein Leserecht und/oder Selektierungsrecht für das Abbild des entsprechenden Datensatzes. Ein Leserecht erlaubt es dem Inhaber den Inhalt des Datensatzes zu Lesen. Ein Selektierungsrecht erlaubt es dem Inhaber beispielsweise statistische Auswertungen unter Berücksichtigung des Abbilds des Datensatzes auszuführen. Beispielsweise kann ausgewertet werden, auf wie viele Datensatze bzw. Abbilder von Datensätzen in der zweiten Datenbank ein Nutzer ein bestimmtes Zugriffsrecht, etwa ein Lese- und/oder Selektierungsrecht, besitzt. Ferner kann beispielsweise ausgewertet werden, wie viele Datensätze ein bestimmtes Datum, etwa einen Namen oder ein anderes Attribut eines Nutzers, als Nutzdaten bzw. als in einem Nutzdatenfeld umfassen. Beispielsweise werden unter Verwendung eines Selektierungsrechts nur entsprechende statistische Daten, etwa Häufigkeiten, bereitgestellt. Beispielsweise werden unter Verwendung eines Selektierungsrechts zusätzlich die Datensätze und/oder Abbilder von Datensätzen identifiziert, welche ein bestimmtes Suchkriterium erfüllen, ohne Zugriff auf den Inhalt der entsprechenden Datensätze zu gewähren. Möchte ein Nutzer der zweiten Datenbank auf die unter Verwendung des Selektierungsrechts selektierten Datensätze oder Abbilder von Datensätzen zugreifen, benötigt er zusätzlich ein Leserecht. Falls er dieses Leserecht nicht besitzt, kann er es beispielsweise bei der zweiten Datenbank beantragen.

Beispielsweise vergibt die zweite Datenbank Leserechte und/oder Selektierungsrechte für ein gecachtes Abbild eines Datensatzes der ersten Datenbank. Beispielsweise empfängt die zweite Datenbank bzw. ein Datenbankmanagementsystem der zweiten Datenbank eine Anfrage eines Nutzers zum Gewähren von Selektierungsrechten für Abbilder von Datensätzen. Die Anfrage kann unspezifisch auf Abbilder von Datensätzen beliebiger Datenbanken gerichtet sein oder gezielte auf Abbilder von Datensätzen der ersten Datenbank gerichtet sein. Auf einen Empfang der Anfrage kann die zweite Datenbank beispielsweise prüfen, ob der anfragende Nutzer ein oder mehr vordefinierte erste Kriterien erfüllt. Falls die Prüfung erfolgreich ist, werden dem entsprechenden Nutzer beispielsweise die angefragten Selektierungsrechte gewährt. Falls der Nutzer im Zuge einer Auswertung, beispielsweise einer statistischen Auswertung, ein oder mehrere Abbilder von Datensätzen identifiziert bzw. selektiert, auf deren Inhalt er zugreifen möchte, kann der Nutzer beispielsweise eine Anfrage nach Leserechten für die entsprechenden Abbilder an die zweite Datenbank bzw. das Datenbankmanagementsystem der zweiten Datenbank senden. Die zweite Datenbank bzw. das Datenbankmanagementsystem der zweiten Datenbank prüfen, ob der anfragende Nutzer ein oder mehr vordefinierte zweite Kriterien erfüllt. Falls die Prüfung erfolgreich ist, werden dem entsprechenden Nutzer beispielsweise die angefragten Leserechterechte gewährt. Beispielsweise sind die ersten und zweiten Kriterien identisch. Beispielsweise sind die ersten und zweiten Kriterien verschieden.

Die Verwendung mehrerer unterschiedlicher Typen von Zugriffsrechten für unterschiedliche Zugriffsarten zum Verwalten von Zugriffen und/oder eine individuelle Verknüpfung dieser Zugriffsrechte mit einzelnen Nutzern, um diesen unterschiedliche zu ermöglichen, kann vorteilhaft sein, da dadurch eine besonders feingranulare Kontrolle von Zugriffen ermöglicht werden kann. Für Datensätze der ersten und/oder der zweiten Datenbank können beispielsweise die folgenden Zugriffs- bzw. Nutzungsrechte vergeben werden: Leserecht, Schreibrecht, Selektierungsrecht und/oder Caching-Recht. Für Abbilder von Datensätze der ersten und/oder der zweiten Datenbank können beispielsweise die folgenden Zugriffs- bzw. Nutzungsrechte vergeben werden: Leserecht und/oder Selektierungsrecht.

Anhand der Nutzer-ID des die Caching-Berechtigung erteilenden Nutzers kann beispielsweise eindeutig nahvollzogen werden, wer der zweiten Datenbank die Caching-Berechtigung erteilt hat. Beispielsweise kann die erteilte Caching-Berechtigung nur von dem erteilenden Nutzer revoziert bzw. entzogen werden. Alternativ kann dem erteilenden Nutzer sein Caching-Recht, d.h. sein Recht Caching-Berechtigung zu erteilen, entzogen werden. Damit kann dem Caching-Berechtigungsnachweis seine Grundlage entzogen und dieser mithin revoziert werden. Dem erteilenden Nutzer kann sein Caching-Recht beispielsweise nur von einem derjenigen Nutzer entzogen werden, welche Teil einer Berechtigungskette, an deren Ende das Caching-Recht des erteilenden Nutzers steht und/oder welche das Caching-Recht des erteilenden Nutzers umfasst. sind. Die Berechtigungskette umfasst beispielsweise eine Abfolge von Nutzern der ersten Datenbank ausgehend von einem Erzeuger des entsprechenden Datensatzes bis hin zu dem erteilenden Nutzer, wobei jeweils der in der Abfolge vorausgehende Nutzer dem nachfolgenden Nutzer ein Caching-Recht erteilt hat. Wir die Berechtigungskette unterbrochen, etwa indem eines der erteilten Caching-Rechte revoziert wird verliert der erteilende Nutzer sein Caching-Recht und dem Caching-Berechtigungsnachweis wird seine Grundlage entzogen.

Anhand der Datenbank-ID der zweiten Datenbank kann der Empfänger der Caching-Berechtigung, welche mit dem Caching-Berechtigungsnachweis nachgewiesen wird, eindeutig identifiziert würden. Beispielsweise umfasst die Datenbank-ID eine Adresse der zweiten Datenbank, mit welcher die zweite Datenbank adressiert werden kann. Beispielsweise ist die Adresse der zweiten Datenbank unabhängig von der Datenbank-ID der zweiten Datenbank. beispielsweise umfasst der Caching-Berechtigungsnachweis zusätzlich eine Adresse der zweiten Datenbank.

Anhand der Signatur der ersten Datenbank kann die Validität und Authentizität des Caching-Berechtigungsnachweis belegt werden. Beispielsweise ist der Caching-Berechtigungsnachweis mit einem Signaturschlüssel der ersten Datenbank signiert, bei welchem es sich um einen privaten kryptographischen Schlüssel eines asymmetrischen Schlüsselpaar der ersten Datenbank handelt. Beispielsweise kann die Signatur mit einem Signaturprüfschlüssel der ersten Datenbank geprüft werden, bei welchem um einen öffentlichen kryptographischen Schlüssel des asymmetrischen Schlüsselpaar der ersten Datenbank handelt.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Sender oder Empfänger von Daten, weitergegeben werden darf, sowie einem privaten Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten Schlüssels zu verschlüsseln oder mit dem privaten Schlüssel erstellte digitale Signaturen zu prüfen. Ein privater Schlüssel ermöglicht es seinem Inhaber mit dem öffentlichen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnet Hashwert mit dem Ergebnis der Entschlüsselung überein ist die Signatur korrekt. Wird zudem die Authentizität des Signaturprüfschlüssels, etwa durch ein Zertifikat bestätigt, ist die Signatur valide.

Unter einem Zertifikat wird hier ein digitales Zertifikat verstanden, bei welchem es sich um strukturierte Daten handeln, die dazu dienen, einen öffentlichen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein Zertifikat des entsprechenden Zertifikataussteller zugeordnet ist, wird eine so genannte Zertifikatskette realisiert.

Ferner kann der Caching-Berechtigungsnachweis beispielsweise eine Datenbank-ID der ersten Datenbank umfassen, welche den Caching-Berechtigungsnachweis signiert. Anhand der Datenbank-ID der ersten Datenbank kann der Sender des Caching-Berechtigungsnachweises eindeutig identifiziert würden. Beispielsweise umfasst die Datenbank-ID eine Adresse der ersten Datenbank, mit welcher die erste Datenbank adressiert werden kann. Beispielsweise ist die Adresse der ersten Datenbank unabhängig von der Datenbank-ID der ersten Datenbank. beispielsweise umfasst der Caching-Berechtigungsnachweis zusätzlich eine Adresse der ersten Datenbank.

Nach Ausführungsformen legt die Berechtigungsstruktur für den Datensatz Zugriffs- bzw. Nutzungsrechte fest, beispielsweise werden die Rechte hierarchisch ausgehend von einem Ersteller des entsprechenden Datensatzes jeweils für Nutzer der ersten Datenbank vergeben, sodass sich eine hierarchische Kettenstruktur entsteht. Falls einer der Nutzer Rechte an eine Mehrzahl von Nutzern vergibt ergibt sich eine verzweigte Kette bzw. eine Baumstruktur. Demgegenüber wird die Caching-Berechtigung keine Nutzer der ersten Datenbank, sondern der zweiten Datenbank erteilt.

Nach Ausführungsformen wird bei einer Anfrage für einen Zugriff auf einen Datensatz der ersten Datenbank die Berechtigungsstruktur, welche ein Recht des anfragenden Nutzers zu dem angefragten Zugriff belegt, mit der Anfrage mitgeschickt. Nach Ausführungsformen ist die Berechtigungsstruktur in der ersten Datenbank hinterlegt und wird von der ersten Datenbank bzw. einem Datenbankmanagementsystem der ersten Datenbank zum Validieren der Anfrage verwendet. Beispielsweise ist die Anfrage mit einem privaten kryptographischen Schlüssel des anfragenden Nutzers signiert, während die Berechtigungsstruktur einen öffentlichen kryptographischen Schlüssel des anfragenden Nutzers als Signaturprüfschlüssel bereitstellt.

Nach Ausführungsformen umfasst die Berechtigungsstruktur eine Kette von Zertifikaten, welche jeweils ein oder mehrere Zugriffs- bzw. Nutzungsrechte für einen Datensatz der ersten Datenbank bestätigen. Mithin handelt es sich beispielsweise um Berechtigungszertifikate. Jedes einem Wurzelzertifikat folgendes Zertifikat der hierarchischen Zertifikatskette ist jeweils von einem übergeordneten Zertifikat abgeleitet bzw. mit einem privaten kryptographischen Schlüssel eines dem übergeordneten Zertifikat zugeordneten asymmetrischen Schlüsselpaar signiert. Das Wurzelzertifikat ist beispielsweise ein Zertifikat des Erstellers des Datensatzes. Dabei kann ein abgeleitetes Zertifikat nur über Rechte verfügen, über welche auch das übergeordnete Zertifikat verfügt. Beispielsweise verfügt das Wurzelzertifikat über alle maximale Rechte, d.h. etwa ein Schreib-, Lese-, Selektierungs- und Caching-Recht.

Nach Ausführungsformen umfasst die Berechtigungsstruktur eine Blockchain, beispielsweise eine unidirektional oder eine bidirektional verknüpfte Blockchain. Beispielsweise sind die Blöcke der Blockchain, welche einem Wurzelblock folgen, jeweils einem Nutzer der ersten Datenbank zugeordnet und definieren, welche Rechte dem entsprechenden Nutzer von einem Nutzer der ersten Datenbank erteilt wurden, dem der unmittelbar vorangehende Block der Blockchain zugeordnet ist. Nach Ausführungsformen erlaubt die Blockchain Verzweigungen, wenn einer der Nutzer mehreren Nutzern jeweils Rechte erteilt. Ein Block der Blockchain kann dabei einem Nutzer der ersten Datenbank, welchem der entsprechende block zugeordnet ist, nur solch Rechte erteilen, über welche auch der Nutzer verfügt, welchem der unmittelbar vorangehende Block zugeordnet ist.

Eine Blockchain stellt dabei eine erweiterbare Liste von Datensätzen bereit, welche in Blöcken angeordnet sind. Die Integrität der einzelnen Blöcke wird durch eine Verkettung mit ein oder mehreren Nachbarblöcken unter Verwendung einer kryptographischen Funktion, etwa einer Hashfunktion, gesichert. Dadurch, dass die Blöcke jeweils aus einer Anwendung der kryptographischen Funktion auf Dateninhalte der Nachbarblöcke und/oder des entsprechenden Blocks resultierende kryptografische Prüfwerte umfasst, ergibt sich eine Verkettung der Blöcke. Diese Verkettung kann beispielsweise unilateral oder bilateral sein.

Somit ist es schwer, eine solche Blockchain nachträglich zu manipulieren, da hierzu nicht nur ein einzelner Block manipuliert werden müsste, sondern alle mit diesem verketten Blöcke, deren Prüfwerte von dem Dateninhalte des entsprechenden einzelnen Blocks abhängen. Wird der zu manipulierende Block tatsächlich manipuliert, so ändert sich sein Prüfwert. Dieser geänderte Prüfwert passt nicht mehr zu den Prüfwerten der Nachbarblöcke, wodurch die Manipulation erkennbar wird und bei einer Prüfung mittels der Prüfwerte auffällt.

Nach Ausführungsformen weist der Caching-Berechtigungsnachweis eine Caching-Berechtigung der zweiten Datenbank für ein Abbild genau eines Datensatzes der ersten Datenbank nach. Beispielsweise umfasst der Caching-Berechtigungsnachweis genau eine Datensatz-ID des einen zu cachenden Datensatzes.

Nach Ausführungsformen weist der Caching-Berechtigungsnachweis beispielsweise Caching-Berechtigungen der zweiten Datenbank für Abbilder eine Mehrzahl von Datensätzen der ersten Datenbank nach. Beispielsweise umfasst der Caching-Berechtigungsnachweis eine Mehrzahl von Datensatz-IDs der Mehrzahl von zu cachenden Datensätzen.

Nach Ausführungsformen sind in der ersten Datenbank eine Mehrzahl von ersten Datensätzen gespeichert, welche von der ersten Datenbank verwaltet werden. Die Mehrzahl der in der ersten Datenbank gespeicherten ersten Datensätze umfasst den Datensatz, dessen Abbild zum Cachen freigegeben wird. Nach Ausführungsformen sind in der ersten Datenbank ein oder mehrere Abbilder von Datensätzen der zweiten Datenbank gespeichert.

Nach Ausführungsformen sind in der zweiten Datenbank eine Mehrzahl von zweiten Datensätzen gespeichert, welche von der ersten Datenbank verwaltet werden. Nach Ausführungsformen sind die ersten und zweiten Datensätze verschieden voneinander. Nach Ausführungsformen ist in der zweiten Datenbank eine Mehrzahl von Abbildern von Datensätzen der ersten Datenbank gespeichert.

Nach Ausführungsformen umfasst das Bereitstellen des Caching-Berechtigungsnachweises ein Speichern des Caching-Berechtigungsnachweises in der ersten Datenbank. Fragt die zweite Datenbank ein Abbild eines Datensatz der ersten Datenbank an, prüft die erste Datenbank unter Verwendung der ein oder mehreren in der ersten Datenbank gespeicherten Caching-Berechtigungsnachweises, ob der zweiten Datenbank eine Caching-Berechtigung zum Cachen des angefragten Datensatzes erteilt wurde. Beispielsweise ist die Anfrage von der zweiten Datenbank signiert, während ein Signaturprüfschlüssel zum Prüfen der Signatur beispielsweise von dem Caching-Berechtigungsnachweis umfasst ist. Alternativ kann der Signaturprüfschlüssel beispielsweise der Datenbank-ID der zweiten Datenbank zugeordnet sein, etwa durch ein Speichern der entsprechenden Zuordnung in der ersten Datenbank und/oder durch ein Zertifikat. Wird für die zweite Datenbank ein Caching-Berechtigungsnachweises ausgestellt, werden der zweiten Datenbank beispielsweise Informationen zugesendet, für welchen Datensatz eine Caching-Berechtigung erteilt wurde.

Nach Ausführungsformen umfasst das Bereitstellen des Caching-Berechtigungsnachweises ein Senden des Caching-Berechtigungsnachweises an die zweite Datenbank. Ausführungsformen können den Vorteil haben, dass die zweite Datenbank über den Caching-Berechtigungsnachweis verfügt und diesen bei einer Anfrage nach einem Abbild eines Datensatzes der ersten Datenbank als Nachweis einer Caching-Berechtigung mitsenden kann. Beispielsweise ist die Anfrage von der zweiten Datenbank signiert, während ein Signaturprüfschlüssel zum Prüfen der Signatur beispielsweise von dem Caching-Berechtigungsnachweis umfasst ist. Alternativ kann der Signaturprüfschlüssel beispielsweise der Datenbank-ID der zweiten Datenbank zugeordnet sein, etwa durch ein Speichern der entsprechenden Zuordnung in der ersten Datenbank und/oder durch ein Zertifikat.

Nach Ausführungsformen umfasst das Verfahren unter der Voraussetzung eines Vorliegens eines gültigen Caching-Berechtigungsnachweises der zweiten Datenbank zum Cachen eines Abbilds des Datensatzes ferner ein Bereitstellen des Abbilds des Datensatzes für die zweite Datenbank. Das Bereitstellen umfasst:
- Erstellen des Abbilds des Datensatzes zum Cachen in der zweiten Datenbank,
- Senden des erstellten Abbilds zum Cachen an die zweite Datenbank.

Ausführungsformen können den Vorteil haben, dass der zweiten Datenbank ein oder mehrere Abbilder von Datensätzen der ersten Datenbank zur Verfügung gestellt und von dieser genutzt werden könne. Beispielsweise können die bereitgestellten Abbilder für statistische Auswertungen und/oder inhaltliche Analysen oder Suchen verwendet werden.

Nach Ausführungsformen erfolgt das Bereitstellen des Abbilds des Datensatzes für die zweite Datenbank automatisch auf das Bereitstellen des Caching-Berechtigungsnachweises für die zweite Datenbank. Beispielsweise wird der Caching-Berechtigungsnachweis zusammen mit dem Abbild an die zweite Datenbank gesendet.

Nach Ausführungsformen erfolgt das Bereitstellen des Abbilds des Datensatzes für die zweite Datenbank in Antwort auf einen Empfang einer Anfrage der zweiten Datenbank zum Bereitstellen eines Abbilds des Datensatzes zum Cachen in der zweiten Datenbank. Das Verfahren umfasst ferner:
- Empfangen der Anfrage der zweiten Datenbank zum Bereitstellen eines Abbilds des Datensatzes, wobei die Anfrage den Caching-Berichtigungsnachweis der zweiten Datenbank umfasst,
- Validieren des Caching-Berichtigungsnachweises der zweiten Datenbank,
- auf ein erfolgreiches Validieren des Caching-Berichtigungsnachweises hin, Bereitstellen des Abbilds des Datensatzes zum Cachen in der zweiten Datenbank.

Ausführungen können den Vorteil haben, dass die zweite Datenbank bei Bedarf ein Abbild des Datensatzes der ersten Datenbank anfragen kann. Eine Caching-Berechtigung kann die zweite Datenbank mit dem Caching-Berichtigungsnachweis nachweisen. Beispielsweise ist die Anfrage von der zweiten Datenbank signiert. Beispielsweise umfasst der Caching-Berichtigungsnachweis einen Signaturprüfschlüssel zum Prüfen der Signatur der zweiten Datenbank. Beispielsweise ist der Signaturprüfschlüssel ein öffentlicher kryptographischer Schlüssel, welcher der Datenbank-ID der zweiten Datenbank zugeordnet ist.

Nach Ausführungsformen umfasst das Validieren des Caching-Berechtigungsnachweises ein Prüfen der Berechtigungsstruktur des Datensatzes, ob für den Nutzer, welcher gemäß der Nutzer-ID des Caching-Berichtigungsnachweises die Caching-Berechtigung der zweiten Datenbank erteilt, ein Caching-Recht zum Erteilen von Caching-Berechtigungen in die Berechtigungsstruktur des Datensatzes eingetragen ist.

Ausführungsformen können den Vorteil haben, dass sichergestellt werden kann, dass der entsprechende Nutzer nach wie vor ein Ca hing-Recht, d.h. das Recht zum Erteilend er Caching-Berechtigung besitzt. Falls dies nicht mehr der Fall ist, verliert damit auch die Caching-Berechtigung ihre Gültigkeit,

Nach Ausführungsformen ist das erstellte Abbild des Datensatzes von der ersten Datenbank signiert. Ausführungsformen können den Vorteil haben, dass die Validität und Authentizität des bereitgestellten Abbilds sichergestellt werden können.

Nach Ausführungsformen sind dem Abbild des Datensatzes ferner Metadaten zugeordnet, welche zusammen mit dem Abbild des Datensatzes von der ersten Datenbank signiert sind. Ausführungsformen können den Vorteil haben, dass die Validität und Authentizität der mit dem Abbild bereitgestellten Metadaten sichergestellt werden können.

Nach Ausführungsformen umfassen die Metadaten eine Berechtigungsstruktur des Abbilds. Die Berechtigungsstruktur der zweiten Datenbank erteilt ein Leserecht und/oder Selektierungsrecht für das Abbild des Datensatzes. Ausführungsformen können den Vorteil haben, dass die Berechtigungsstruktur des Abbilds von der zweiten Datenbank bzw. von dem Datenbankmanagementsystem der zweiten Datenbank wie eine Berechtigungsstruktur einer der Datensätze der zweiten Datenbank verwaltet und gehandhabt werden kann.

Bei der Berechtigungsstruktur des Abbilds handelt es sich beispielsweise um die Berechtigungsstruktur des Datensatzes, wobei der die Caching-Berechtigung erteilende Nutzer der zweiten Datenbank zusätzlich in der Berechtigungsstruktur ein Leserecht und/oder Selektierungsrecht erteilt, welches für das Abbild gilt.

Beispielsweise wird für das Abbild eine eigenständige Berechtigungsstruktur von der ersten Datenbank initiiert, welche als Ersteller des Abbilds der zweiten Datenbank ein Leserecht und/oder Selektierungsrecht erteilt.

Nach Ausführungsformen erteilt die Berechtigungsstruktur der zweiten Datenbank ferner das Recht, das Leserecht und/oder Selektierungsrecht für das Abbild des Datensatzes an Nutzer der zweiten Datenbank zu delegieren. Ausführungsformen können den Vorteil haben, dass die zweite Datenbank Nutzern der zweiten Datenbank nicht nur ein Leserecht und/oder Selektierungsrecht für das Abbild erteilen kann, sondern diesen Nutzern zusätzlich die Möglichkeit einräumen kann, selbst anderen Nutzern der zweiten Datenbank ein Leserecht und/oder Selektierungsrecht für das Abbild zu erteilen.

Nach Ausführungsformen umfassen die Metadaten ferner einen Zeitstempel der Erstellung des Abbilds. Ausführungsformen können den Vorteil haben, dass anhand des Zeitstempels die Aktualität des Abbilds bestimmt bzw. eingeschätzt werden kann.

Nach Ausführungsformen umfassen die Metadaten ferner eine Angabe einer zeitlich beschränkten Gültigkeit des Abbilds des Datensatzes. Ausführungsformen können den Vorteil haben, dass mit dem gecachten Abbild eine zeitlich beschränkte Nutzung des Datensatzes der ersten Datenbank für die zweite Datnebank ermöglicht werden kann. Zudem kann so beispielsweise verhindert werden, dass die zweite Datenbank ein Abbild einer veraltete bzw. allzu veraltete Version des Datensatzes nutzt. Ist die Gültigkeit abgelaufen und/oder stehet ein Ablauf der Gültigkeit bevor, fragt die zweite Datenbank beispielsweise eine aktualisierte Version des Abbilds bei der zweiten Datenbank an.

Nach Ausführungsformen weist der Caching-Berechtigungsnachweis eine zeitlich beschränkte Gültigkeit auf. Ist die Gültigkeit des Caching-Berechtigungsnachweis abgelaufen, benötigt die zweite Datenbank einen Caching-Berechtigungsnachweis. Nach alternativen Ausführungsformen weist der Caching-Berechtigungsnachweis keine zeitlich beschränkte Gültigkeit auf.

Nach Ausführungsformen umfasst die Angabe der zeitlich beschränkten Gültigkeit des Abbilds des Datensatzes eine Angabe, wann die Gültigkeit abläuft, beispielsweise in Form eines Zeitstempels. Nach Ausführungsformen umfasst die Angabe der zeitlich beschränkten Gültigkeit eine Angabe einer Länge eines Gültigkeitszeitraums des Abbilds. Das Abbild des Datensatzes ist mithin beispielsweise ab dem Zeitpunkt seiner Erstellung, dokumentiert durch einen entsprechenden Zeitstempel, bis zum Ablauf des zugeordneten Gültigkeitszeitraum gültig.

Nach Ausführungsformen umfasst das Verfahren ferner ein Aktualisieren des bereitgestellten Abbilds des Datensatzes. Das Aktualisieren umfasst:
- Empfangen einer Anfrage der zweiten Datenbank zum Bereitstellen eines aktualisierten Abbilds des Datensatzes durch die zweite Datenbank, wobei die Anfrage den Caching-Berichtigungsnachweis der zweiten Datenbank umfasst,
- Validieren des Caching-Berichtigungsnachweises der zweiten Datenbank,
- auf ein erfolgreiches Validieren hin, Erstellen eines aktualisierten Abbilds des Datensatzes zum Cachen zum Cachen an die zweite Datenbank,
- Senden des aktualisierten Abbilds zum Cachen an die zweite Datenbank.

Ausführungsformen können den Vorteil haben, dass der zweiten Datenbank, beispielsweise bei Ablauf der Gültigkeit des Abbilds des Datensatzes, ein aktualisiertes Abbild des Datensatzes zur weiteren Nutzung zur Verfügung gestellt werden kann. Nach Ausführungsformen kann durch das Aktualisieren ein Synchronisationsmechanismus zum Synchronisieren des Abbilds des Datensatzes, welches in der zweiten Datenbank gespeichert ist, mit der in der ersten Datenbank gespeicherten Datensatz implementiert werden.

Nach Ausführungsformen ist dem aktualisierten Abbild eine verlängerte zeitliche Gültigkeit zugeordnet, d.h. die Gültigkeit des aktualisierten Abbilds später als die Gültigkeit einer vorangegangenen Version des Abbilds.

Nach Ausführungsformen wird die Anfrage zum Bereitstellen des aktualisierten Abbilds des Datensatzes mit der verlängerten zeitlichen Gültigkeit innerhalb eines vordefinierten Zeitraums vor dem Ablauf der Gültigkeit des zu aktualisierenden Abbilds des Datensatzes empfangen. Nach Ausführungsformen ist Voraussetzung für das Erstellen des aktualisierten Abbilds des Datensatzes mit der verlängerten zeitlichen Gültigkeit der Empfang der Anfrage innerhalb des vordefinierten Zeitraums vor dem Ablauf der Gültigkeit des zu aktualisierenden Abbilds des Datensatzes. Nach Ausführungsformen ist der Empfang der Anfrage innerhalb des vordefinierten Zeitraums vor dem Ablauf der Gültigkeit des zu aktualisierenden Abbilds des Datensatzes keine Voraussetzung für das Erstellen des aktualisierten Abbilds des Datensatzes mit der verlängerten zeitlichen Gültigkeit.

Nach Ausführungsformen wird die Anfrage zum Bereitstellen des aktualisierten Abbilds des Datensatzes mit der verlängerten zeitlichen Gültigkeit nach Ablauf der Gültigkeit des zu aktualisierenden Abbilds des Datensatzes empfangen. Nach Ausführungsformen ist Voraussetzung für das Erstellen des aktualisierten Abbilds des Datensatzes mit der verlängerten zeitlichen Gültigkeit der Empfang der Anfrage nach Ablauf der Gültigkeit des zu aktualisierenden Abbilds des Datensatzes. Nach Ausführungsformen ist Empfang der Anfrage nach Ablauf der Gültigkeit des zu aktualisierenden Abbilds des Datensatzes keine Voraussetzung für das Erstellen des aktualisierten Abbilds des Datensatzes mit der verlängerten zeitlichen Gültigkeit.

Nach Ausführungsformen umfassen die Metadaten ferner eine Abbild-ID des Datensatzes. Ausführungsformen ermöglichen es anhand der Abbild-ID das Abbild eindeutig zu identifizieren. Beispielsweise kann die Abbild-ID dazu verwendet werden dem Abbild eine eigenständige Berechtigungsstruktur zuzuordnen. Nach Ausführungsformen umfassen die Metadaten ferner die Datensatz-ID des Datensatzes. Nach Ausführungsformen umfasst die Abbild-ID die Datensatz-ID des Datensatzes. Ausführungsformen können den Vorteil haben, dass anhand der Datensatz-ID der Datensatz, um dessen Abbild es sich handelt, eindeutig bestimmt werden kann.

Nach Ausführungsformen umfassen die Metadaten ferner eine Datenbank-ID der ersten Datenbank. Nach Ausführungsformen umfasst die Abbild-ID die Datenbank-ID der ersten Datenbank. Ausführungsformen können den Vorteil haben, dass anhand der Datenbank-ID die Datenbank, aus welcher der Datensatz stammt, um dessen Abbild es sich handelt, eindeutig bestimmt werden kann.

Nach Ausführungsformen setzt das Senden des Caching-Berichtigungsnachweises von der ersten Datenbank an die zweite Datenbank und/oder das Senden des Abbilds des Datensatzes an die zweite Datenbank eine erfolgreiche Authentifizierung der ersten Datenbank durch die zweite Datenbank und/oder eine erfolgreiche Authentifizierung der zweiten Datenbank durch die erste Datenbank voraus. Nach Ausführungsformen setzt das Senden des Caching-Berichtigungsnachweises von der ersten Datenbank an die zweite Datenbank und/oder das Senden des Abbilds des Datensatzes an die zweite Datenbank eine erfolgreiche gegenseitige Authentifizierung der ersten und zweiten Datenbank voraus.

Nach Ausführungsformen setzt der Empfang einer Anfrage der zweiten Datenbank durch die erste Datenbank und/oder das Validieren des Caching-Berichtigungsnachweises der zweiten Datenbank eine erfolgreiche Authentifizierung der zweiten Datenbank durch die erste Datenbank voraus. Nach Ausführungsformen setzt der Empfang einer Anfrage der zweiten Datenbank durch die erste Datenbank und/oder das Validieren des Caching-Berichtigungsnachweises der zweiten Datenbank eine erfolgreiche gegenseitige Authentifizierung der ersten und zweiten Datenbank voraus.

Nach Ausführungsformen erfolgt eine Authentifizierung der ersten Datenbank durch die erste Datenbank unter Verwendung eines Zertifikats der ersten Datenbank. Nach Ausführungsformen stellt das Zertifikat des ersten Datensatzes einen ersten öffentlichen kryptographischen Schlüssel eines ersten asymmetrischen Schlüsselpaars der ersten Datenbank zur Verfügung. Nach Ausführungsformen umfasst das erste asymmetrischen Schlüsselpaars der ersten Datenbank ferner einen ersten privaten kryptographischen Schlüssel.

Nach Ausführungsformen erfolgt eine Authentifizierung der zweiten Datenbank durch die erste Datenbank unter Verwendung eines Zertifikats der zweiten Datenbank. Nach Ausführungsformen stellt das Zertifikat des zweiten Datensatzes einen zweiten öffentlichen kryptographischen Schlüssel eines zweiten asymmetrischen Schlüsselpaars der zweiten Datenbank zur Verfügung. Nach Ausführungsformen umfasst das zweite asymmetrischen Schlüsselpaars der zweiten Datenbank ferner einen zweiten privaten kryptographischen Schlüssel.

Nach Ausführungsformen erfolgt die Kommunikation zwischen den beiden Datenbanken verschlüsselt. Beispielsweise wird eine Ende-zu-Ende-Verschlüsselung verwendet. Beispielsweise wird ein ephemererer symmetrischer Schlüssel, welcher zwischen den beiden Datenbanken, auf eine erfolgreiche Authentifizierung hin ausgehandelt wird, für die Verschlüsselung verwendet.

Nach Ausführungsformen handelt es sich bei der zweiten Datenbank im Hinblick auf den Datensatz um eine Slave-Datenbank. Nach Ausführungsformen handelt es sich bei der ersten Datenbank im Hinblick auf den Datensatz um eine Master-Datenbank. Mit anderen Worten bestimmt beispielsweise die erste Datenbank über den Inhalt des Datensatzes bzw. ist für diesen maßgeblich, während die zweite Datenbank lediglich den von der ersten Datenbank zur Verfügung gestellten Inhalt nutzen kann.

Nach Ausführungsformen handelt es sich bei den beiden Datenbanken um Datenbanken eines verteilten Datenbanksystems. Beispielsweise umfasst das verteilte Datenbanksystem neben der ersten und zweiten Datenbank weitere Datenbanken. Ausführungsformen können den Vorteil haben, dass mit dem Caching von Abbildern von Datensätzen die Datenbänke des verteilten Datenbanksystems dazu in die Lage versetzt werden können, sich gegenseitig zugriff auf individuelle, in ihnen gespeicherte Datensätze zu gewähren und sich diese zur Nutzung gegenseitig zur Verfügung zu stellen.

Nach Ausführungsformen ist jeder in einer der Datenbanken des verteilten Datenbanksystems gespeicherten Datensätze in genau einer der Datenbanken des verteilten Datenbanksystems gespeichert und wird von dieser Datenbank verwaltet. In ein oder mehreren weiteren Datenbanken des verteilten Datenbanksystems können beispielsweise jeweils Abbilder des entsprechenden Datensatzes gespeichert sein.

Nach Ausführungsformen umfasst die Berechtigungsstruktur des Datensatzes eine hierarchische Berechtigungskette, welche für jeden Nutzer der ersten Datenbank, der ein Nutzungsrecht zur Nutzung des Datensatzes besitzt, eine Erteilungskette, in welcher ausgehend von dem Ersteller des Datensatzes bis zu dem Nutzer mit dem entsprechenden Nutzungsrecht eine Abfolge von Nutzer der ersten Datenbank eingetragen ist. Innerhalb der Abfolge hat jeweils der vorangehende Nutzer dem nachfolgenden Nutzer das entsprechende Nutzungsrecht erteilt.

Nach Ausführungsformen umfassen die in der Berechtigungsstruktur des Datensatzes eingetragenen Nutzungsrechte neben einem Caching-Recht ein oder mehrere der folgenden Nutzungsrechte: Leserecht, Schreibrecht, Selektierungsrecht. Ein Leserecht gewährt das Recht den Inhalt des Datensatzes zu lesen. Ein Schreibrecht gewährt das Recht den Inhalt des Datensatzes zu verändern. Ein Selektierungsrecht gewährt das Recht den Inhalt des Datensatzes für Auswertung, beispielsweise statistische Auswertungen, heranzuziehen, ohne dass dabei ein Lesezugriff auf den entsprechenden Inhalt gewährt wir. Beispielsweise kann das Selektierungsrecht zu verwendet werden relevante Datensätze mit relevanten Inhalten zu selektieren. Das Caching-Recht dient beispielsweise dazu einen Caching-Berechtigungsnachweis zu erteilen bzw. eine Erteilung zu initiieren.

Nach Ausführungsformen sind den Nutzungsrechten Berechtigungskategorien Lesen, Schreiben, und Selektieren jeweils ein kategorieindividueller Delegierbarkeitsparameter zugeordnet, welcher festlegt, ob das Recht der entsprechenden Kategorie delegierbar ist. Falls das Nutzungsrecht der entsprechenden Kategorie delegierbar ist, ist der Inhaber des entsprechenden Nutzungsrechts berechtigt sein Nutzungsrecht, z.B. eine Leserecht, Schreibrecht, Selektierungsrecht und/oder Caching-Recht, zu delegieren.

Nach Ausführungsformen initiiert die zweite Datenbank eine Berechtigungsstruktur des Abbilds, welche eine hierarchische Berechtigungskette umfasst, welche für jeden Nutzer der zweiten Datenbank, der ein Nutzungsrecht zur Nutzung des Abbilds erteilt wird, eine Erteilungskette umfasst, in welcher ausgehend von der ersten Datenbank als Ersteller des Abbilds oder der zweiten Datenbank bis zu dem Nutzer mit dem entsprechenden Nutzungsrecht eine Abfolge von Nutzer der zweiten Datenbank eingetragen ist. Innerhalb der Abfolge hat jeweils der vorangehende Nutzer dem nachfolgenden Nutzer das entsprechende Nutzungsrecht erteilt. Nach alternativen Ausführungsformen initiiert die erste Datenbank die Berechtigungsstruktur des Abbilds.

Nach Ausführungsformen umfassen die in der Berechtigungsstruktur des Abbilds eingetragenen Nutzungsrechte ein Leserecht und/oder ein Selektierungsrecht.

Nach Ausführungsformen sind den Nutzungsrechten des Abbildes Berechtigungskategorien Lesen und Selektieren jeweils ein kategorieindividueller Delegierbarkeitsparameter zugeordnet, welcher festlegt, ob das Recht der entsprechenden Kategorie delegierbar ist. Falls das Nutzungsrecht der entsprechenden Kategorie delegierbar ist, ist der Inhaber des entsprechenden Nutzungsrechts berechtigt sein Nutzungsrecht, z.B. eine Leserecht und/oder Selektierungsrecht, zu delegieren.

Nach Ausführungsformen wird auf eine Revozierungsanfrage des Nutzers der ersten Datenbank hin, welcher der zweiten Datenbank die Caching-Berechtigung zum Cachen des Datensatzes erteilt hat, die Caching-Berechtigung der zweiten Datenbank revoziert und der Caching-Berechtigungsnachweis der zweiten Datenbank wird als ungültig zurückgewiesen. Ausführungsformen könnend en Vorteil haben, dass die Caching-Berechtigung der zweiten Datenbank und damit der Caching-Berechtigungsnachweis der zweiten Datenbank revozierbar ist, Beispielsweise umfasst die erste Datenbank ein Revozierungsverzeichnis, in welches ein Revozieren der Caching-Berechtigung eingetragen wird. Im Zuge der Validierung des Caching-Berechtigungsnachweises wird beispielsweise von der ersten Datenbank geprüft, ob in der Revozierungsverzeichnis ein Revozierungseintrag für den Caching-Berechtigungsnachweis vorliegt. Falls dies der Fall ist, wird der Caching-Berechtigungsnachweis als ungültig zurückgewiesen.

Nach Ausführungsformen wird auf eine Revozierung des Caching-Rechts des Nutzers der ersten Datenbank hin, welcher der zweiten Datenbank die Caching-Berechtigung zum Cachen des Datensatzes erteilt hat, die Caching-Berechtigung der zweiten Datenbank revoziert und der Caching-Berechtigungsnachweis der zweiten Datenbank wird als ungültig zurückgewiesen. Beispielsweise wir in das Revozierungsverzeichnis der ersten Datenbank ein Revozierung des Caching-Rechts eingetragen, falls dieses revoziert wurde. Alternativ wird eine Revozierung beispielsweise in die Berechtigungsstruktur des Datensatzes eingetragen. Im Zuge der Validierung des Caching-Berechtigungsnachweises wird beispielsweise von der ersten Datenbank geprüft, ob eine Revozierung des Caching-Rechts des Nutzers dokumentiert ist. Falls dies der Fall ist, wird der Caching-Berechtigungsnachweis als ungültig zurückgewiesen.

Ausführungsformen umfassen ferner eine Datenbank mit einem Datenbankmanagementsystem. In einem Speicher der Datenbank ist ein von dem Datenbankmanagementsystem verwalteter Datensatz gespeichert. Das Datenbankmanagementsystem ist dazu konfiguriert, einer weiteren Datenbank eine Caching-Berechtigung zum Cachen eines Abbilds des Datensatzes zu erteilen. Dem Datensatz ist eine Berechtigungsstruktur zugeordnet, in welche eingetragen ist, welche Nutzer der Datenbank ein Caching-Recht zum Erteilen von Caching-Berechtigungen zum Cachen von Abbildern des Datensatzes besitzen. Das Erteilen der Caching-Berechtigung umfasst:
- Empfangen einer Anfrage eines Nutzers der Datenbank zum Ausstellen eines Caching-Berechtigungsnachweises durch die Datenbank für die weitere Datenbank, wobei der Caching-Berechtigungsnachweis eine Caching-Berechtigung der weiteren Datenbank zum Cachen eines Abbilds des Datensatzes nachweist,
- Prüfen der Berechtigungsstruktur des Datensatzes, ob für den anfragenden Nutzer ein Caching-Recht zum Erteilen von Caching-Berechtigungen in die Berechtigungsstruktur des Datensatzes eingetragen ist,
- auf eine erfolgreiche Prüfung hin, Erstellen des Caching-Berechtigungsnachweises für die weitere Datenbank, wobei der Caching-Berechtigungsnachweis eine Datensatz-ID des zu cachenden Datensatzes umfasst, eine Angabe der gewährten Caching-Berechtigung, eine Nutzer-ID des die Caching-Berechtigung erteilenden Nutzers und eine Datenbank-ID der weiteren Datenbank, welcher die Caching-Berechtigung erteilt wird, wobei der Caching-Berechtigungsnachweis von der Datenbank signiert ist,
- Bereitstellen des Caching-Berechtigungsnachweises für die weitere Datenbank.

Nach Ausführungsformen ist die Datenbank dazu konfiguriert jede der zuvor beschriebenen Ausführungsformen des Verfahrens zum Erteilen einer Caching-Berechtigung auszuführen.

Unter einem "Datenbankmanagementsystem" wird hier eine auf einem Computersystem ausgeführte Verwaltungssoftware zum Speichern und Wiedergewinnen von Daten in einer Datenbank verstanden. Das Datenbankmanagementsystem ist dabei unter anderem als ein Zugriffsverwaltungssystem konfiguriert ist und Zugriffe auf die entsprechenden Daten verwaltet. Vorzugsweise werden die Daten in dem Zugriffsverwaltungssystem widerspruchsfrei und dauerhaft gespeichert und verschieden Anwendungsprogrammen und Nutzern in bedarfsgerechter Form effizient zur Verfügung gestellt. Ferner ist das Datenbankmanagementsystem zum Erstellen von Abbildern der Datensätze der Datenbank konfiguriert. Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselten Ende-zu-Ende-Verbindung. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Nach Ausführungsformen ist in dem Speicher der Datenbank eine Mehrzahl von Datensätzen der Datenbank gespeichert. Nach Ausführungsformen sind in dem Speicher der Datenbank ein oder mehrerer Abbilder von Datensätzen ein oder mehrere weitere Datenbänke gespeichert.

Nach Ausführungsformen verwaltetet das Datenbankmanagementsystem die in dem Speicher gespeicherten Datensätze und/oder Abbilder von Datensätzen von Datensätzen.

Nach Ausführungsformen ist in dem Speicher der weiteren Datenbank eine Mehrzahl von weiteren Datensätzen der weiteren Datenbank gespeichert. Nach Ausführungsformen sind in dem Speicher der weiteren Datenbank ein oder mehrere weitere Abbilder von weiteren Datensätzen ein oder mehrerer weiterer Datenbänke gespeichert.

Nach Ausführungsformen verwaltetet ein weiteres Datenbankmanagementsystem der weiteren Datenbank die in dem Speicher gespeicherten weiteren Datensätze und/oder weiteren Abbilder von weiteren Datensätzen.

Nach Ausführungsformen ist das Datenbankmanagementsystem ferner dazu konfiguriert ist, unter der Voraussetzung eines Vorliegens eines gültigen Caching-Berechtigungsnachweises der weiteren Datenbank zum Cachen eines Abbilds des Datensatzes, das Abbild des Datensatzes für die weitere Datenbank bereitzustellen. Das Bereitstellen umfasst:
- Erstellen des Abbilds des Datensatzes zum Cachen in der zweiten Datenbank,
- Senden des erstellten Abbilds zum Cachen an die zweite Datenbank.

Ausführungsformen umfassen ferner ein verteiltes Datenbanksystem, welches eine Datenbank nach einer der zuvor genannten Ausführungsformen und eine weitere Datenbank nach einer der zuvor genannten Ausführungsformen mit einem weiteren Speicher und einem Datenbankmanagementsystem umfasst, welches Datensätze und Abbilder von Datensätzen verwaltetet, die in dem weiteren Speicher gespeichert sind.

Nach Ausführungsformen ist das Datenbanksystem dazu konfiguriert jede der zuvor beschriebenen Ausführungsformen des Verfahrens zum Erteilen einer Caching-Berechtigung auszuführen.

Im Weiteren werden Ausführungsformen der Erfindung mit Bezugnahme auf die Zeichnungen näher erläutert. Es zeigen:
- Figur 1: ein schematisches Diagramm eines exemplarischen verteilten Datenbanksystems,
- Figur 2: ein schematisches Diagramm eines exemplarischen Caching-Berechtigungsnachweis,
- Figur 3: ein schematisches Diagramm einer exemplarischen Berechtigungsstruktur,
- Figur 4: ein Flussdiagramm eines exemplarischen Verfahrens zum Bereitstellen des Abbilds des Datensatzes,
- Figur 5: ein Flussdiagramm eines exemplarischen Verfahrens zum Aktualisieren des Abbilds des Datensatzes und
- Figur 6: ein Flussdiagramm eines exemplarischen Verfahrens zum Revozieren eines Caching-Berechtigungsnachweis.

Elemente der nachfolgenden Ausführungsformen, die einander entsprechen, werden mit denselben Bezugszeichen gekennzeichnet.

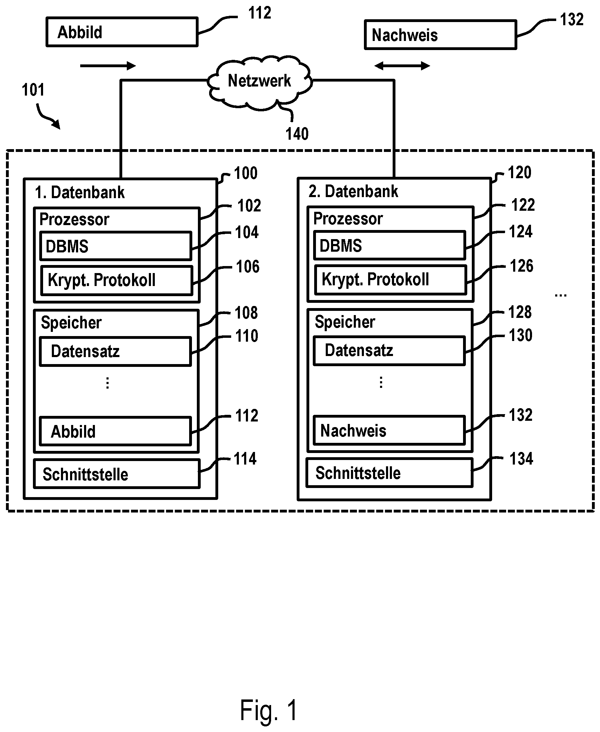

Figur 1 zeigt ein exemplarisches verteiltes Datenbanksystem 101, welches eine Mehrzahl von Datenbanken 100, 120 umfasst. Die Datenbanken 100, 120 können mittels Kommunikationsschnittstellen 114, 134 über ein Netzwerk 140 miteinander kommunizieren. Bei dem Netzwerk 140 handelt es sich beispielsweise um ein öffentliches Netzwerk, wie etwa das Internet, oder ein privates Netzwerk, etwa ein Intranet. Die Datenbanken 100, 120 umfassen jeweils einen Speicher 108, 138 mit einer Mehrzahl darin gespeicherter Datensätze 110, 130. Die Computersysteme auf denen die Datenbanken 100, 120 implementiert sind umfassen jeweils einen Prozessor 102, 122, auf welchem jeweils ein Datenbankmanagementsystem 104, 124 bzw. Programminstruktionen eines entsprechenden Datenbankmanagementsystem 104, 124. Die Datenbankmanagementsystem 104, 124 verwalten die Datensätze 110, 130 der jeweiligen Datenbanken 100, 120. Ferner sind die Prozessor 102, 122 der Datenbanken 100, 120 dazu konfiguriert kryptographische Protokolle 106, 126 zur kryptographischen Sicherung der Kommunikation zwischen den Datenbanken 100, 120 über das Netzwerk 140 auszuführen. Die kryptographische Sicherung umfasst beispielsweise eine gegenseitige Authentifizierung der Datenbänke 100, 120 sowie ein Aushandeln ephemererer kryptographischer Schlüssel, etwa eines ephemereren symmetrischen kryptographischen Schlüssels zum Implementieren eines verschlüsselten Kommunikationskanals zwischen den Datenbanken 100, 120. Der verschlüsselte Kommunikationskanal stellt beispielsweise Ende-zu-Ende-Verschlüsselung er Kommunikation zwischen den beiden Datenbanken 100, 120 bereit.

Beispielsweise erstellt eine erste der Datenbanken 100 einen Caching-Berechtigungsnachweis 132, welcher eine zweite der Datenbanken 120 berechtigt ein Abbild 112 eines Datensatzes 110 der ersten Datenbank 100 zu cachen. Die erste Datenbank 100 sendet den Caching-Berechtigungsnachweis 132, beispielsweise unter Verwendung eines verschlüsselten Kommunikationskanals über das Netzwerk 140, an die zweite Datenbanken 120. Den empfangenen Caching-Berechtigungsnachweis 132 speichert die zweite Datenbanken 120 beispielsweise in ihrem Speicher 128. Ferner verwendet die zweite Datenbanken 120 den Caching-Berechtigungsnachweis 132 beispielsweise zum Anfragen eines Abbild 112 des Datensatzes 110 der ersten Datenbank 100. Hierzu sendet die zweite Datenbanken 120, beispielsweise unter Verwendung eines verschlüsselten Kommunikationskanals über das Netzwerk 140, eine entsprechende Anfrage an die erste Datenbank 110. Die Anfrage umfasst beispielsweise den Caching-Berechtigungsnachweis 132 zum Nachweis der Berechtigung der zweiten Datenbank zum Cachen des Abbilds 112 des Datensatzes 110 der ersten Datenbank 100. Die erste Datenbank 100 prüft den bereitgestellten Caching-Berechtigungsnachweis 132. Falls dieser valide ist, erstellt die erste Datenbank 100 das angefragte Abbild 112 des Datensatzes 110 und sendet diese, beispielsweise unter Verwendung des verschlüsselten Kommunikationskanals über das Netzwerk 140, an die zweite Datenbank 120. Die zweite Datenbank empfängt das Abbild 112 des Datensatzes 110, speichert dieses in dem Speicher 128 und verwaltet dieses unter Verwendungen des Datenbankmanagementsystems 124 zusammen mit den Datensätzen 130 der zweiten Datenbank 120. Beispielsweise ermöglicht das Datenbankmanagementsystems 124 berechtigten Nutzern der zweiten Datenbank 120 Zugriffe, etwa Selektierungszugriffe und/oder Lesezugriffe, auf das Abbild 112 des Datensatzes 110.

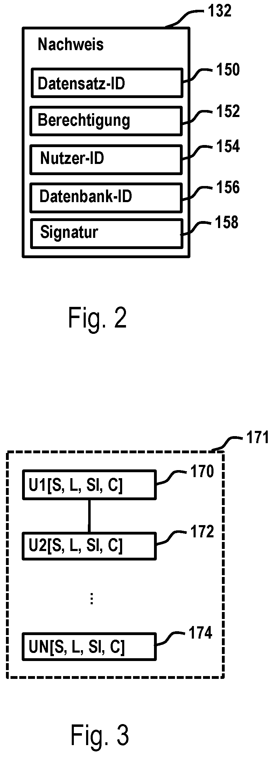

Figur 2 zeigt einen exemplarischen Caching-Berechtigungsnachweis 132. Der Caching-Berechtigungsnachweis 123 umfasst eine Datensatz-ID 150, welche den Datensatz der Ursprungsdatenbank identifiziert, für welchen der Caching-Berechtigungsnachweis 132 eine Caching-Berechtigung erteilt. Ferner umfasst der Caching-Berechtigungsnachweis 132 eine Angabe der gewährten Caching-Berechtigung 152, anhand derer ersichtlich ist, welche Berechtigung 152 erteilt wird, eine Nutzer-ID 154, anhand derer der die Caching-Berechtigung erteilende Nutzer identifizierbar ist, sowie eine Datenbank-ID 156 der Empfängerdatenbank, anhand derer ersichtlich ist, wem die entsprechende Caching-Berechtigung 152 erteilt wird. Der Caching-Berechtigungsnachweis 132 ist von der Ursprungsdatenbank signiert und umfasst eine entsprechende Signatur 158. Beispielsweise umfasst der Caching-Berechtigungsnachweis 132 ferner eine Datenbank-ID der Ursprungsdatenbank.

Figur 3 zeigt eine exemplarische Berechtigungsstruktur 171 eines Datensatzes einer der Datenbanken des verteilten Datenbankensystems aus Figur 1. Die Berechtigungsstruktur 171 definiert, welcher Nutzer der entsprechenden Datenbank, welche Rechte in Bezug auf den entsprechenden Datensatz besitzt. Beispielsweise sind die folgenden Rechte definiert: Schreibrecht S zum Verändern des Datensatzes, Leserecht L zum Lesen des Datensatzes, Selektierungsrecht zum Selektieren SI des entsprechenden Datensatzes und/der zum Verwenden des Datensatzes in statistischen Anwendungen sowie ein Caching-Recht C zum Erteilen einer Caching-Berechtigung zum Cachen eines Abbilds des Datensatzes. Die Berechtigungsstruktur 171 weist beispielsweise eine Ketten- oder Baumstruktur ausgehend von dem Ersteller U1 des Datensatzes auf. Der Ersteller U1 besitzt alle Rechte, d.h. S, L, SI, C. Dies Rechte sind beispielsweise in einen ersten Block 170 oder ein erstes Zertifikat der Berechtigungsstruktur 171 eingetragen. Der Ersteller U1 kann weiteren Nutzern U2 Rechte erteilen, welche in einen Block 172 oder ein Zertifikat der Berechtigungsstruktur 171 eingetragen werden. Die dem Nutzer U2 erteilten Rechte können delegierbar sein, sodass der Nutzer U2 Zugriffsrechte bzw. Nutzungsrechte an andere Nutzer der Datenbank erteilen kann. Ein Nutzer UN fragt beispielsweise ein Ausstellen eines Caching-Berechtigungsnachweises an. Die Datenbank prüft, ob für den anfragenden Nutzer UN ein Caching-Recht C zum Erteilen von Caching-Berechtigungen in die Berechtigungsstruktur 171 des Datensatzes eingetragen. Falls die Berechtigungsstruktur 171 einen Block 174 oder ein Zertifikat umfasst, welches dem Nutzer UN ein entsprechendes Caching-Recht C erteilt, erstellt dir Datenbank eine Caching-Berechtigungsnachweis über die Erteilung der angefragten Caching-Berechtigungen.

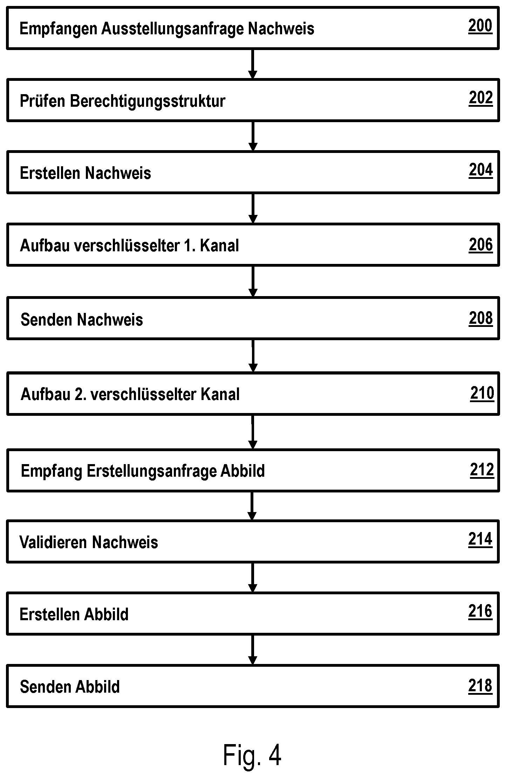

Figur 4 zeigt ein exemplarisches Verfahren zum Bereitstellen eines Abbilds eines Datensatzes einer ersten Datenbank. In Block 200 wird eine Anfrage eines Nutzers der ersten Datenbank zum Ausstellen eines Caching-Berechtigungsnachweises durch die erste Datenbank für eine zweite Datenbank empfangen. Der angefragte Caching-Berechtigungsnachweis soll eine Caching-Berechtigung der zweiten Datenbank zum Cachen eines Abbilds des Datensatzes der ersten Datenbank nachweisen. Die Anfrage umfasst beispielsweise eine Nutzer-ID des anfragenden Nutzers, eine Datensatz-ID des entsprechenden Datensatzes sowie eine Datenbank-ID der zweiten Datenbank. In Block 202 prüft die erste Datenbank bzw. ein Datenbankmanagementsystem der ersten Datenbank eine Berechtigungsstruktur des Datensatzes, ob für den anfragenden Nutzer ein Caching-Recht zum Erteilen von Caching-Berechtigungen in die Berechtigungsstruktur des Datensatzes eingetragen ist. Falls dies nicht der Fall ist, wird das Erstellen eines Caching-Berechtigungsnachweises verweigert. Falls dies der Fall ist, geht es mit Block 204 weiter. In Block 204 wird der angefragte Caching-Berechtigungsnachweis erstellt. Dieser umfasst beispielsweise eine Datensatz-ID des zu cachenden Datensatzes, eine Angabe der gewährten Caching-Berechtigung, eine Nutzer-ID des die Caching-Berechtigung erteilenden Nutzers und eine Datenbank-ID der zweiten Datenbank, welcher die Caching-Berechtigung erteilt wird. Ferner ist der Caching-Berechtigungsnachweis von der ersten Datenbank signiert. In Block 206 wird beispielsweise ein erster verschlüsselter Kommunikationskanal zwischen der ersten Datenbank und der zweiten Datenbank aufgebaut. Der Aufbau des ersten verschlüsselten Kommunikationskanals umfasst beispielsweise eine gegenseitige Authentifizierung sowie ein Aushandeln eines ersten ephemeren symmetrischen kryptographischen Schlüssels zum Verschlüsseln der Kommunikation. In Block 208 wird der Caching-Berechtigungsnachweis von der ersten Datenbank über den ersten verschlüsselten Kommunikationskanal an die zweite Datenbank gesendet. Alternativ kann der Caching-Berechtigungsnachweis beispielsweise dem anfragenden Nutzer zur Verfügung gestellt werden und dieser kann ihn über eine verschlüsselten Kommunikationskanal zwischen einem Computersystem des entsprechenden Nutzers und der zweiten Datenbank an die zweite Datenbank senden. Die zweite Datenbank empfängt den Caching-Berechtigungsnachweis und kann diesen nutzen.

Beispielsweise nutzt die zweite Datenbank den Caching-Berechtigungsnachweis zum Anfragen eines Abbilds des entsprechenden Datensatzes. In Block 210 wird zu diesem Zweck beispielsweise ein zweiter verschlüsselter Kommunikationskanal zwischen der ersten Datenbank und der zweiten Datenbank aufgebaut. Der Aufbau des zweiten verschlüsselten Kommunikationskanals umfasst beispielsweise eine gegenseitige Authentifizierung sowie ein Aushandeln eines zweiten ephemeren symmetrischen kryptographischen Schlüssels zum Verschlüsseln der Kommunikation. In Block 212 empfängt die erste Datenbank über den zweiten verschlüsselten Kommunikationskanal eine Anfrage der zweiten Datenbank zum Bereitstellen des Abbilds des Datensatzes. Die Anfrage umfasst beispielsweise den Caching-Berichtigungsnachweis der zweiten Datenbank. In Block 214 validiert die erste Datenbank bzw. das erste Datenbankmanagementsystem den Caching-Berichtigungsnachweises der zweiten Datenbank. Dabei umfasst das Validieren des Caching-Berechtigungsnachweises beispielsweise ein Prüfen der Berechtigungsstruktur des Datensatzes, ob für den Nutzer, welcher gemäß der Nutzer-ID des Caching-Berichtigungsnachweises die Caching-Berechtigung der zweiten Datenbank erteilt, nach wie vor ein gültiges Caching-Recht zum Erteilen von Caching-Berechtigungen in die Berechtigungsstruktur des Datensatzes eingetragen ist. Ferner kann geprüft werden, ob der Caching-Berichtigungsnachweises zwischenzeitlich revoziert wurde, d.h., ob beispielsweise ein Revozierungseintrag in einem Revozierungsregister vorliegt. Falls die Validierung nicht erfolgreich ist, wird das Erstellen eines Abbilds des Datensatzes verweigert. Falls die Validierung erfolgreich ist, geht es mit Block 216 weiter. In Block 216 erstellt die erste Datenbank bzw. das erste Datenbankmanagementsystem das angefragte Abbild des Datensatzes zum Cachen in der zweiten Datenbank. Beispielsweise ist dem Abbild nur ein begrenzter Gültigkeitszeitraum zugeordnet. Beispielsweise signiert die erste Datenbank bzw. das erste Datenbankmanagementsystem das Abbild. In Block 218 sendet die erste Datenbank das erstellte Abbild über den zweiten verschlüsselten Kommunikationskanal an die zweite Datenbank. Die zweite Datenbank empfängt das Abbild und speichert dieses zusammen mit den Datensätzen der zweiten Datenbank zur weiteren Nutzung. Beispielsweise erteilt die zweite Datenbank Nutzern der zweiten Datenbank Selektierungsrechte und/oder Leserechte für das Abbild.

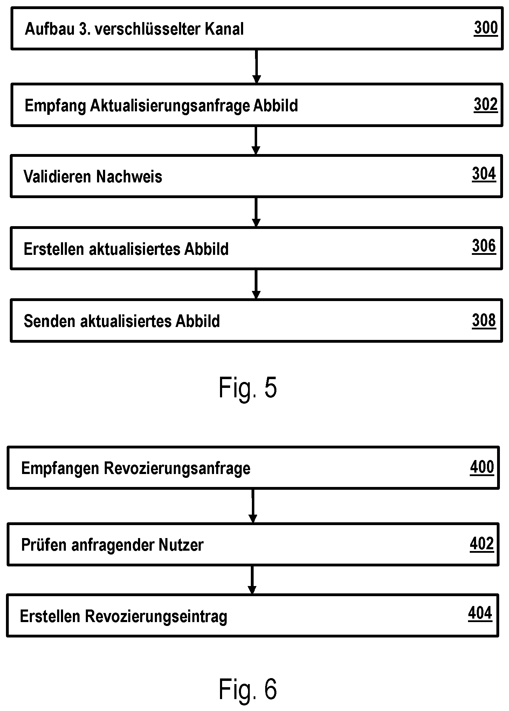

Figur 5 zeigt ein exemplarisches Verfahren zum Aktualisieren des Abbilds des Datensatzes. In Block 300 wird zu diesem Zweck beispielsweise ein dritter verschlüsselter Kommunikationskanal zwischen der ersten Datenbank und der zweiten Datenbank aufgebaut. Der Aufbau des dritten verschlüsselten Kommunikationskanals umfasst beispielsweise eine gegenseitige Authentifizierung sowie ein Aushandeln eines dritten ephemeren symmetrischen kryptographischen Schlüssels zum Verschlüsseln der Kommunikation. In Block 302 empfängt die erste Datenbank über den dritten verschlüsselten Kommunikationskanal eine Anfrage der zweiten Datenbank zum Bereitstellen eines aktualisierten Abbilds des Datensatzes. Die Anfrage umfasst beispielsweise den Caching-Berichtigungsnachweis der zweiten Datenbank. In Block 304 validiert die erste Datenbank bzw. das erste Datenbankmanagementsystem den Caching-Berichtigungsnachweises der zweiten Datenbank. Dabei umfasst das Validieren des Caching-Berechtigungsnachweises beispielsweise ein Prüfen der Berechtigungsstruktur des Datensatzes, ob für den Nutzer, welcher gemäß der Nutzer-ID des Caching-Berichtigungsnachweises die Caching-Berechtigung der zweiten Datenbank erteilt, nach wie vor ein gültiges Caching-Recht zum Erteilen von Caching-Berechtigungen in die Berechtigungsstruktur des Datensatzes eingetragen ist. Ferner kann geprüft werden, ob der Caching-Berichtigungsnachweises zwischenzeitlich revoziert wurde, d.h., ob beispielsweise ein Revozierungseintrag in einem Revozierungsregister vorliegt. Falls die Validierung nicht erfolgreich ist, wird das Erstellen eines aktualisierten Abbilds des Datensatzes verweigert. Falls die Validierung erfolgreich ist, geht es mit Block 306 weiter. In Block 306 erstellt die erste Datenbank bzw. das erste Datenbankmanagementsystem das aktualisierte Abbild des Datensatzes zum Cachen in der zweiten Datenbank. Beispielsweise signiert die erste Datenbank bzw. das erste Datenbankmanagementsystem das aktualisierte Abbild. Beispielsweise wird die Gültigkeit des aktualisierten Abbilds verlängert. In Block 308 sendet die erste Datenbank das aktualisierte Abbild über den zweiten verschlüsselten Kommunikationskanal an die zweite Datenbank. Die zweite Datenbank empfängt das Abbild und ersetzt das bisherige Abbild mit dem aktualisierten Abbild zur weiteren Nutzung. Beispielsweise ordnet die zweite Datenbank bzw. ein zweites Datenbankmanagementsystem die Selektierungsrechte und/oder Leserechte des bisherigen Abbilds auch dem aktualisierten Abbild zu. Alternativ kann die Beispielsweise erteilt die zweite Datenbank bzw. das zweite Datenbankmanagementsystem Selektierungsrechte und/oder Leserechte für das aktualisierte Abbild neu erteilen.

Figur 6 zeigt schließlich ein exemplarisches Verfahren zum Revozieren eines Caching-Berechtigungsnachweis. In Block 400 empfangt die erste Datenbank bzw. das erste Datenbankmanagementsystem eine Revozierungsanfrage des Nutzers der ersten Datenbank, welcher der zweiten Datenbank die Caching-Berechtigung zum Cachen des Datensatzes erteilt hat. Alternativ kann die Revozierungsanfrage beispielsweise von einem Nutzer stammen, welcher der Berechtigungskette gehört, aus welcher sich das Caching-Recht des Nutzers ableitet, welcher die Caching-Berechtigung erteilt hat. In Block 402 wird geprüft, ob der anfragende Nutzer tatsächlich die zu revozierende Caching-Berechtigung erteilt hat bzw. zu der Berechtigungskette gehört, aus welcher sich das Caching-Recht des Nutzers ableitet, welcher die Caching-Berechtigung erteilt hat. Falls dies nicht der Fall ist, wird die Revozierung verweigert. Falls dies der Fall ist, geht es in Block 404 weiter. In Block 404 die Caching-Berechtigung der zweiten Datenbank revoziert. Dies hat zur Folge, dass Caching-Berechtigungsnachweis der zweiten Datenbank seine Gültigkeit verliert. Hierfür erfolgt beispielsweise ein Revozierungseintrag in einem Revozierungsregister der ersten Datenbank. Falls die zweite Datenbank ein Abbild oder ein aktualisiertes Abbild unter Verwendung des revozierten Caching-Berechtigungsnachweis anzufragen versucht, wird ein Erstellen eines entsprechenden Abbilds bzw. aktualisierten Abbilds verweigert.

### Bezugszeichenliste

- 100: Datenbank
- 101: verteiltes Datenbanksystem
- 102: Prozessor
- 104: Datenbankmanagementsystem
- 106: kryptographisches Protokoll
- 108: Speicher
- 110: Datensatz
- 112: Abbild
- 114: Kommunikationsschnittstelle
- 120: Datenbank
- 122: Prozessor
- 124: Datenbankmanagementsystem
- 126: kryptographisches Protokoll
- 128: Speicher
- 130: Datensatz
- 132: Caching-Berechtigungsnachweis
- 134: Kommunikationsschnittstelle
- 140: Netzwerk
- 150: Datensatz-ID
- 152: Caching-Berechtigung
- 154: Nutzer-ID
- 156: Datenbank-ID
- 158: Signatur
- 170: Berechtigungsstruktur
- 171: Rechte
- 172: Rechte
- 174: Rechte

## Patentansprüche

1. Verfahren zum Erteilen einer Caching-Berechtigung (152) zum Cachen eines Abbilds (112) eines Datensatzes (110), welcher in einer ersten Datenbank (100) gespeichert ist und von dieser verwaltet wird, für eine zweite Datenbank (120), wobei dem Datensatz (110) eine Berechtigungsstruktur (170) zugeordnet ist, in welche eingetragen ist, welche Nutzer der ersten Datenbank (100) ein Caching-Recht zum Erteilen von Caching-Berechtigungen (152) zum Cachen von Abbildern (112) des Datensatzes (110) besitzen, wobei das Verfahren umfasst:
• Empfangen einer Anfrage eines Nutzers der ersten Datenbank (100) zum Ausstellen eines Caching-Berechtigungsnachweises (132) durch die erste Datenbank (100) für die zweite Datenbank (120), wobei die Anfrage mit einem privaten kryptographischen Schlüssel des anfragenden Nutzers signiert ist, während die Berechtigungsstruktur einen öffentlichen kryptographischen Schlüssel des anfragenden Nutzers als Signaturprüfschlüssel des anfragenden Nutzers bereitstellt, wobei der Caching-Berechtigungsnachweis (132) eine Caching-Berechtigung (152) der zweiten Datenbank (120) zum Cachen eines Abbilds (112) des Datensatzes (110) nachweist,
• Prüfen der Berechtigungsstruktur (170) des Datensatzes (110), ob für den anfragenden Nutzer ein Caching-Recht zum Erteilen von Caching-Berechtigungen (152) in die Berechtigungsstruktur (170) des Datensatzes (110) eingetragen ist,
wobei die Berechtigungsstruktur (170) des Datensatzes (110) eine hierarchische Berechtigungskette in Form einer Zertifikatskette oder einer Blockchain umfasst, welche für jeden Nutzer der ersten Datenbank (100), der ein Nutzungsrecht zur Nutzung des Datensatzes (110) besitzt, eine Erteilungskette umfasst, in welcher ausgehend von dem Ersteller des Datensatzes (110) bis zu dem Nutzer mit dem entsprechenden Nutzungsrecht eine Abfolge von Nutzer der ersten Datenbank (100) eingetragen ist, wobei innerhalb der Abfolge jeweils der vorangehende Nutzer dem nachfolgenden Nutzer das entsprechende Nutzungsrecht erteilt hat,
• auf eine erfolgreiche Prüfung hin, Erstellen des Caching-Berechtigungsnachweises (132) für die zweite Datenbank (120), wobei der Caching-Berechtigungsnachweis (132) eine Datensatz-ID (150) des zu cachenden Datensatzes (110) umfasst, eine Angabe der gewährten Caching-Berechtigung (152), eine Nutzer-ID (154) des die Caching-Berechtigung (152) erteilenden Nutzers und eine Datenbank-ID (156) der zweiten Datenbank (120), welcher die Caching-Berechtigung (152) erteilt wird, wobei die Berechtigung (152) auf ein Cachen des Datensatzes (110) beschränkt ist, wobei der Caching-Berechtigungsnachweis (132) von der ersten Datenbank (100) mit einem Signaturschlüssel der ersten Datenbank (100) signiert ist, bei welchem es sich um einen privaten kryptographischen Schlüssel eines asymmetrischen Schlüsselpaar der ersten Datenbank (100) handelt, wobei die Signatur des Caching-Berechtigungsnachweises (132) mit einem Signaturprüfschlüssel der ersten Datenbank (100) geprüft werden kann, bei welchem es sich um einen öffentlichen kryptographischen Schlüssel des asymmetrischen Schlüsselpaar der ersten Datenbank (100) handelt,
• Bereitstellen des Caching-Berechtigungsnachweises (132) für die zweite Datenbank (120),
wobei das Verfahren unter der Voraussetzung eines Vorliegens eines gültigen Caching-Berechtigungsnachweises (132) der zweiten Datenbank (120) zum Cachen eines Abbilds (112) des Datensatzes (110) ferner ein Bereitstellen des Abbilds (112) des Datensatzes (110) für die zweite Datenbank (120) umfasst, wobei das Bereitstellen umfasst:
• Erstellen des Abbilds (112) des Datensatzes (110) zum Cachen in der zweiten Datenbank (120), wobei das erstellte Abbild (112) des Datensatzes (110) von der ersten Datenbank (100) signiert ist, wobei dem Abbild (112) des Datensatzes (110) ferner Metadaten zugeordnet sind, welche zusammen mit dem Abbild (112) des Datensatzes (110) von der ersten Datenbank (100) signiert sind, wobei die Metadaten eine Berechtigungsstruktur des Abbilds (112) umfassen,
• Senden des erstellten Abbilds (112) zum Cachen an die zweite Datenbank (120).

2. Verfahren nach Anspruch 1, wobei das Bereitstellen des Abbilds (112) des Datensatzes (110) für die zweite Datenbank (120) automatisch auf das Bereitstellen des Caching-Berechtigungsnachweises (132) für die zweite Datenbank (120) erfolgt oder
wobei das Bereitstellen des Abbilds (112) des Datensatzes (110) für die zweite Datenbank (120) in Antwort auf einen Empfang einer Anfrage der zweiten Datenbank (120) zum Bereitstellen eines Abbilds (112) des Datensatzes (110) zum Cachen in der zweiten Datenbank (120) erfolgt, wobei das Verfahren ferner umfasst:
• Empfangen der Anfrage der zweiten Datenbank (120) zum Bereitstellen eines Abbilds (112) des Datensatzes (110), wobei die Anfrage den Caching-Berichtigungsnachweis (132) der zweiten Datenbank (120) umfasst,
• Validieren des Caching-Berichtigungsnachweises (132) der zweiten Datenbank (120),
• auf ein erfolgreiches Validieren des Caching-Berichtigungsnachweises (132) hin, Bereitstellen des Abbilds (112) des Datensatzes (110) zum Cachen in der zweiten Datenbank (120),
wobei das Validieren des Caching-Berechtigungsnachweises (132) beispielsweise ein Prüfen der Berechtigungsstruktur (170) des Datensatzes (110) umfasst, ob für den Nutzer, welcher gemäß der Nutzer-ID (154) des Caching-Berichtigungsnachweises (132) die Caching-Berechtigung (152) der zweiten Datenbank (120) erteilt, ein Caching-Recht zum Erteilen von Caching-Berechtigungen (152) in die Berechtigungsstruktur (170) des Datensatzes (110) eingetragen ist.

3. Verfahren nach einem der vorangehenden Ansprüche, wobei die Berechtigungsstruktur der zweiten Datenbank (120) ein Leserecht und/oder Selektierungsrecht für das Abbild (112) des Datensatzes (110) erteilt,
wobei die Berechtigungsstruktur der zweiten Datenbank (120) beispielsweise ferner das Recht erteilt, das Leserecht und/oder Selektierungsrecht für das Abbild (112) des Datensatzes (110) an Nutzer der zweiten Datenbank (120) zu delegieren.

4. Verfahren nach einem der vorangehenden Ansprüche, wobei die Metadaten ferner eine Angabe einer zeitlich beschränkten Gültigkeit des Abbilds (112) des Datensatzes (110) umfassen.

5. Verfahren nach einem der vorangehenden Ansprüche, wobei das Verfahren ferner ein Aktualisieren des bereitgestellten Abbilds (112) des Datensatzes (110) umfasst, wobei das Aktualisieren umfasst:
• Empfangen einer Anfrage der zweiten Datenbank (120) zum Bereitstellen eines aktualisierten Abbilds des Datensatzes (110) durch die erste Datenbank (100), wobei die Anfrage den Caching-Berichtigungsnachweis (132) der zweiten Datenbank (120) umfasst,
• Validieren des Caching-Berichtigungsnachweises (132) der zweiten Datenbank (120),
• auf ein erfolgreiches Validieren hin, Erstellen eines aktualisierten Abbilds des Datensatzes (110) zum Cachen in der zweiten Datenbank (120),
• Senden des aktualisierten Abbilds zum Cachen an die zweite Datenbank (120),
wobei dem aktualisierten Abbild des Datensatzes (110) beispielsweise eine verlängerte zeitliche Gültigkeit zugeordnet ist.

6. Verfahren nach einem der vorangehenden Ansprüche, wobei es sich bei den beiden Datenbanken (100, 120) um Datenbanken eines verteilten Datenbanksystems (101) handelt.

7. Verfahren nach einem der vorangehenden Ansprüche, wobei die in der Berechtigungsstruktur (170) des Datensatzes (110) eingetragenen Nutzungsrechte neben einem Caching-Recht ein oder mehrere der folgenden Nutzungsrechte umfassen: Leserecht, Schreibrecht, Selektierungsrecht.

8. Verfahren nach einem der vorangehenden Ansprüche, wobei die zweite Datenbank (120) eine Berechtigungsstruktur des Abbilds (112) initiiert, welche eine hierarchische Berechtigungskette umfasst, welche für jeden Nutzer der zweiten Datenbank (120), der ein Nutzungsrecht zur Nutzung des Abbilds (112) erteilt wird, eine Erteilungskette umfasst, in welcher ausgehend von der ersten Datenbank (100) als Ersteller des Abbilds (112) oder der zweiten Datenbank (120) bis zu dem Nutzer mit dem entsprechenden Nutzungsrecht eine Abfolge von Nutzer der zweiten Datenbank (120) eingetragen ist, wobei innerhalb der Abfolge jeweils der vorangehende Nutzer dem nachfolgenden Nutzer das entsprechende Nutzungsrecht erteilt hat,
wobei die in der Berechtigungsstruktur des Abbilds (112) eingetragenen Nutzungsrechte beispielsweise ein Leserecht und/oder ein Selektierungsrecht umfassen.

9. Verfahren nach einem der vorangehenden Ansprüche, wobei auf eine Revozierungsanfrage des Nutzers der ersten Datenbank (100) hin, welcher der zweiten Datenbank (120) die Caching-Berechtigung (152) zum Cachen des Datensatzes (110) erteilt hat, die Caching-Berechtigung (152) der zweiten Datenbank (120) revoziert wird und der Caching-Berechtigungsnachweis (132) der zweiten Datenbank (120) als ungültig zurückgewiesen wird, und/oder
wobei auf eine Revozierung des Caching-Rechts des Nutzers der ersten Datenbank (100) hin, welcher der zweiten Datenbank (120) die Caching-Berechtigung (152) zum Cachen des Datensatzes (110) erteilt hat, die Caching-Berechtigung (152) der zweiten Datenbank (120) revoziert wird und der Caching-Berechtigungsnachweis (132) der zweiten Datenbank (120) als ungültig zurückgewiesen wird.

10. Datenbank (100) mit einem Datenbankmanagementsystem (104), wobei in einem Speicher (108) der Datenbank (100) ein von dem Datenbankmanagementsystem (104) verwalteter Datensatz (110) gespeichert ist, wobei das Datenbankmanagementsystem (104) dazu konfiguriert ist, einer weiteren Datenbank (120) eine Caching-Berechtigung (152) zum Cachen eines Abbilds (112) des Datensatzes (110) zu erteilen, wobei dem Datensatz (110) eine Berechtigungsstruktur (170) zugeordnet ist, in welche eingetragen ist, welche Nutzer der Datenbank (100) ein Caching-Recht zum Erteilen von Caching-Berechtigungen (152) zum Cachen von Abbildern (112) des Datensatzes (110) besitzen, wobei das Erteilen der Caching-Berechtigung (152) umfasst:
• Empfangen einer Anfrage eines Nutzers der Datenbank (100) zum Ausstellen eines Caching-Berechtigungsnachweises (132) durch die Datenbank (100) für die weitere Datenbank (120), wobei die Anfrage mit einem privaten kryptographischen Schlüssel des anfragenden Nutzers signiert ist, während die Berechtigungsstruktur einen öffentlichen kryptographischen Schlüssel des anfragenden Nutzers als Signaturprüfschlüssel des anfragenden Nutzers bereitstellt, wobei der Caching-Berechtigungsnachweis (132) eine Caching-Berechtigung (152) der weiteren Datenbank (120) zum Cachen eines Abbilds (112) des Datensatzes (110) nachweist,
• Prüfen der Berechtigungsstruktur (170) des Datensatzes (110), ob für den anfragenden Nutzer ein Caching-Recht zum Erteilen von Caching-Berechtigungen (152) in die Berechtigungsstruktur (170) des Datensatzes (110) eingetragen ist,
wobei die Berechtigungsstruktur (170) des Datensatzes (110) eine hierarchische Berechtigungskette in Form einer Zertifikatskette oder einer Blockchain umfasst, welche für jeden Nutzer der Datenbank (100), der ein Nutzungsrecht zur Nutzung des Datensatzes (110) besitzt, eine Erteilungskette umfasst, in welcher ausgehend von dem Ersteller des Datensatzes (110) bis zu dem Nutzer mit dem entsprechenden Nutzungsrecht eine Abfolge von Nutzer der Datenbank (100) eingetragen ist, wobei innerhalb der Abfolge jeweils der vorangehende Nutzer dem nachfolgenden Nutzer das entsprechende Nutzungsrecht erteilt hat,
• auf eine erfolgreiche Prüfung hin, Erstellen des Caching-Berechtigungsnachweises (132) für die weitere Datenbank (120), wobei der Caching-Berechtigungsnachweis (132) eine Datensatz-ID (150) des zu cachenden Datensatzes (110) umfasst, eine Angabe der gewährten Caching-Berechtigung (152), eine Nutzer-ID (154) des die Caching-Berechtigung (152) erteilenden Nutzers und eine Datenbank-ID (156) der weiteren Datenbank (120), welcher die Caching-Berechtigung (152) erteilt wird, wobei die Berechtigung (152) auf ein Cachen des Datensatzes (110) beschränkt ist, wobei der Caching-Berechtigungsnachweis (132) von der Datenbank (100) mit einem Signaturschlüssel der Datenbank (100) signiert ist, bei welchem es sich um einen privaten kryptographischen Schlüssel eines asymmetrischen Schlüsselpaar der Datenbank (100) handelt, wobei die Signatur des Caching-Berechtigungsnachweises (132) mit einem Signaturprüfschlüssel der Datenbank (100) geprüft werden kann, bei welchem es sich um einen öffentlichen kryptographischen Schlüssel des asymmetrischen Schlüsselpaar der Datenbank (100) handelt,
• Bereitstellen des Caching-Berechtigungsnachweises (132) für die weitere Datenbank (120),
wobei das Datenbankmanagementsystem (104) ferner dazu konfiguriert ist, unter der Voraussetzung eines Vorliegens eines gültigen Caching-Berechtigungsnachweises (132) der weiteren Datenbank (120) zum Cachen eines Abbilds (112) des Datensatzes (110), das Abbild (112) des Datensatzes (110) für die weitere Datenbank (120) bereitzustellen, wobei das Bereitstellen umfasst:
• Erstellen des Abbilds (112) des Datensatzes (110) zum Cachen in der weiteren Datenbank (120), wobei das erstellte Abbild (112) des Datensatzes (110) von der Datenbank (100) signiert ist, wobei dem Abbild (112) des Datensatzes (110) ferner Metadaten zugeordnet sind, welche zusammen mit dem Abbild (112) des Datensatzes (110) von der Datenbank (100) signiert sind, wobei die Metadaten eine Berechtigungsstruktur des Abbilds (112) umfassen,
• Senden des erstellten Abbilds (112) zum Cachen an die weitere Datenbank (120).

11. Verteiltes Datenbanksystem (101) umfassenden eine Datenbank (100) nach Anspruch 10 und eine weitere Datenbank (120) nach Anspruch 10 mit einem weiteren Speicher (128) und einem Datenbankmanagementsystem (124), welches Datensätze (130) und Abbilder (112) von Datensätzen (110) verwaltetet, die in dem weiteren Speicher (128) gespeichert sind.

## Claims

1. A method for granting a caching authorization (152) to cache an image (112) of a data record (110) which is stored in and managed by a first database (100) for a second database (120), wherein the data record (110) is assigned an authorization structure (170) in which it is recorded which users of the first database (100) have a caching right to grant caching authorizations (152) for caching images (112) of the data record (110), wherein the method comprises:
• receiving a request from a user of the first database (100) to issue a proof of caching authorization (132) by the first database (100) for the second database (120), wherein the request is signed with a private cryptographic key of the requesting user, while the authorization structure provides a public cryptographic key of the requesting user as a signature verification key of the requesting user, wherein the proof of caching authorization (132) proves a caching authorization (152) of the second database (120) for caching an image (112) of the data record (110),
• checking the authorization structure (170) of the data record (110) to determine whether a caching right for granting caching authorizations (152) is recorded in the authorization structure (170) of the data record (110) for the requesting user, wherein the authorization structure (170) of the data record (110) comprises a hierarchical authorization chain in the form of a certificate chain or a blockchain, which comprises, for each user of the first database (100), who has a right of use for using the data record (110), a granting chain in which starting from the creator of the data record (110) to the user with the corresponding right of use a sequence of users of the first database (100) is recorded, wherein, within the sequence, each preceding user granted the corresponding right of use to the subsequent user,
• upon a successful checking, creating the proof of caching authorization (132) for the second database (120), wherein the proof of caching authorization (132) comprises a data record ID (150) of the data record (110) to be cached, an indication of the granted caching authorization (152), a user ID (154) of the user granting the caching authorization (152), and a database ID (156) of the second database (120) to which the caching authorization (152) is granted, wherein the authorization (152) is limited to caching the data record (110), wherein the proof of caching authorization (132) is signed by the first database (100) with a signature key of the first database (100), which is a private cryptographic key of an asymmetric key pair of the first database (100), wherein the signature of the proof of caching authorization (132) is verifiable using a signature verification key of the first database (100), which is a public cryptographic key of the asymmetric key pair of the first database (100),
• providing the proof of caching authorization (132) to the second database (120),
wherein the method further comprises, subject to a presence of a valid proof of caching authorization (132) of the second database (120) to cache an image (112) of the data record (110), providing the image (112) of the data record (110) to the second database (120), wherein the providing comprises:
• creating the image (112) of the data record (110) for the caching in the second database (120), wherein the created image (112) of the data record (110) is signed by the first database (100), wherein the image (112) of the data record (110) is further assigned metadata which is signed together with the image (112) of the data record (110) by the first database (100), wherein the metadata comprises an authorization structure of the image (112),
• sending the created image (112) to the second database (120) for caching.

2. The method of claim 1, wherein the providing of the image (112) of the data record (110) to the second database (120) is performed automatically upon the providing of the proof of caching authorization (132) to the second database (120), or
wherein the providing of the image (112) of the data record (110) to the second database (120) is performed in response to receiving a request from the second database (120) to provide an image (112) of the data record (110) for the caching in the second database (120), the method further comprising:
• receiving the request from the second database (120) to provide an image (112) of the data record (110), wherein the request comprises the proof of caching authorization (132) of the second database (120),
• validating the proof of caching authorization (132) of the second database (120),
• upon a successful validating of the proof of caching authorization (132), providing the image (112) of the data record (110) for the caching in the second database (120),
wherein the validating of the proof of caching authorization (132) comprises, for example, checking the authorization structure (170) of the data record (110) to determine whether for the user, who according to the user ID (154) of the proof of caching authorization (132) grants the caching authorization (152) for the second database (120), a caching right to grant caching authorizations (152) is recorded in the authorization structure (170) of the data record (110).

3. The method of any of the preceding claims, wherein the authorization structure of the second database (120) grants a read right and/or selection right for the image (112) of the data record (110),
wherein the authorization structure of the second database (120) further grants, for example, the right to delegate the read right and/or selection right for the image (112) of the data record (110) to users of the second database (120).

4. The method of any of the preceding claims, wherein the metadata further comprises an indication of a time-limited validity of the image (112) of the data record (110).

5. The method of any of the preceding claims, wherein the method further comprises updating the provided image (112) of the data record (110), wherein the updating comprises:
• receiving a request from the second database (120) to provide an updated image of the data record (110) by the first database (100), wherein the request comprises the proof of caching authorization (132) of the second database (120),
• validating the proof of caching authorization (132) of the second database (120),
• upon a successful validating, creating an updated image of the data record (110) for the caching in the second database (120),
• sending the updated image for the caching to the second database (120),
wherein the updated image of the data record (110) is assigned, for example, an extended period of validity.

6. The method of any of the preceding claims, wherein the two databases (100, 120) are databases of a distributed database system (101).

7. The method of any of the preceding claims, wherein the rights of use recorded in the authorization structure (170) of the data record (110) comprise, in addition to a caching right, one or more of the following rights of use: read right, write right, selection right.

8. The method of any of the preceding claims, wherein the second database (120) initiates an authorization structure of the image (112), which comprises a hierarchical authorization chain, which comprises a grant chain for each user of the second database (120) who is granted a right of use for using the image (112), in which a sequence of users of the second database (120) is recorded, starting from the first database (100) as the creator of the image (112) or the second database (120) up to the user with the corresponding right of use, wherein within the sequence the preceding user granted the corresponding right of use to the subsequent user,
wherein the rights of use recorded in the authorization structure of the image (112) comprise, for example, a read right and/or a selection right.

9. The method of any of the preceding claims, wherein, in response to a revocation request from the user of the first database (100) who granted the second database (120) the caching authorization (152) to cache the data record (110), the caching authorization (152) of the second database (120) is revoked and the proof of caching authorization (132) of the second database (120) is rejected as invalid, and/or
wherein, upon revocation of the caching right of the user of the first database (100) who granted the second database (120) the caching authorization (152) for caching the data record (110), the caching authorization (152) of the second database (120) is revoked and the proof of caching authorization (132) of the second database (120) is rejected as invalid.

10. A database (100) with a database management system (104), wherein a data record (110) managed by the database management system (104) is stored in a memory (108) of the database (100), wherein the database management system (104) is configured to grant a further database (120) a caching authorization (152) to cache an image (112) of the data record (110), wherein the data record (110) is assigned an authorization structure (170) in which it is recorded which users of the database (100) have a caching right to grant caching authorizations (152) for caching images (112) of the data record (110), wherein granting the caching authorization (152) comprises:
• receiving a request from a user of the database (100) to issue a proof of caching authorization (132) by the database (100) for the further database (120), wherein the request is signed with a private cryptographic key of the requesting user, while the authorization structure provides a public cryptographic key of the requesting user as a signature verification key of the requesting user, wherein the proof of caching authorization (132) proves a caching authorization (152) of the further database (120) for caching an image (112) of the data record (110),
• checking the authorization structure (170) of the data record (110) to determine whether a caching right for granting caching authorizations (152) is recorded in the authorization structure (170) of the data record (110) for the requesting user, wherein the authorization structure (170) of the data record (110) comprises a hierarchical authorization chain in the form of a certificate chain or a blockchain, which comprises an issuance chain for each user of the database (100), who has a right of use for using the data record (110), in which starting from the creator of the data record (110) to the user with the corresponding right of use a sequence of users of the database (100) is recorded, wherein, within the sequence, each preceding user granted the corresponding right of use to the subsequent user,
• upon a successful checking, creating the proof of caching authorization (132) for the additional database (120), wherein the proof of caching authorization (132) comprises a data record ID (150) of the data record (110) to be cached, an indication of the granted caching authorization (152), a user ID (154) of the user granting the caching authorization (152), and a database ID (156) of the further database (120) to which the caching authorization (152) is granted, wherein the authorization (152) is limited to caching the data record (110), wherein the proof of caching authorization (132) is signed by the database (100) with a signature key of the database (100), which is a private cryptographic key of an asymmetric key pair of the database (100), wherein the signature of the proof of caching authorization (132) is verifiable using a signature verification key of the database (100), which is a public cryptographic key of the asymmetric key pair of the database (100),
• providing the proof of caching authorization (132) to the further database (120),
wherein the database management system (104) is further configured, subject to a presence of a valid proof of caching authorization (132) of the further database (120) to cache an image (112) of the data record (110), to provide the image (112) of the data record (110) to the further database (120), wherein the providing comprises:
• creating the image (112) of the data record (110) for the caching in the further database (120), wherein the created image (112) of the data record (110) is signed by the database (100), wherein the image (112) of the data record (110) is further assigned metadata which is signed together with the image (112) of the data record (110) by the database (100), wherein the metadata comprises an authorization structure of the image (112),
• sending the created image (112) to the further database (120) for caching.

11. A distributed database system (101) comprising a database (100) according to claim 10 and a further database (120) according to claim 10 with a further memory (128) and a database management system (124) which manages data records (130) and images (112) of data records (110) stored in the further memory (128).

## Revendications

1. Procédé pour accorder une autorisation de mise en cache (152) pour la mise en cache d'une image (112) d'un enregistrement (110) stocké dans une première base de données (100) et géré par celle-ci, pour une deuxième base de données (120),
un enregistrement (110) étant associé à une structure d'autorisations (170) dans laquelle sont enregistrés les utilisateurs de la première base de données (100) disposant d'un droit de mise en cache permettant d'accorder des autorisations de mise en cache (152) pour la mise en cache d'images (112) de l'enregistrement (110),
le procédé comprenant:
• la réception d'une demande d'un utilisateur de la première base de données (100) visant à l'émission, par la première base de données (100), d'une preuve d'autorisation de mise en cache (132) pour la deuxième base de données (120),
la demande étant signée à l'aide d'une clé cryptographique privée de l'utilisateur demandeur, la structure d'autorisations fournissant une clé cryptographique publique de l'utilisateur demandeur comme clé de vérification de signature de l'utilisateur demandeur,
la preuve d'autorisation de mise en cache (132) attestant une autorisation de mise en cache (152) de la deuxième base de données (120) pour mettre en cache une image (112) de l'enregistrement (110),
• la vérification de la structure d'autorisations (170) de l'enregistrement (110) afin de déterminer si un droit de mise en cache permettant d'accorder des autorisations de mise en cache (152) est enregistré dans ladite structure d'autorisations (170) pour l'utilisateur demandeur,
la structure d'autorisations (170) de l'enregistrement (110) comprenant une chaîne d'autorisations hiérarchique sous la forme d'une chaîne de certificats ou d'une blockchain, ladite chaîne comprenant, pour chaque utilisateur de la première base de données (100) disposant d'un droit d'usage de l'enregistrement (110), une chaîne d'octroi dans laquelle, à partir du créateur de l'enregistrement (110) jusqu'à l'utilisateur disposant du droit d'usage correspondant, une séquence d'utilisateurs de la première base de données (100) est enregistrée, chaque utilisateur précédent ayant accordé le droit d'usage correspondant à l'utilisateur suivant dans ladite séquence,
• après vérification réussie, la création de la preuve d'autorisation de mise en cache (132) pour la deuxième base de données (120),
la preuve d'autorisation de mise en cache (132) comprenant : un identifiant d'enregistrement (150) de l'enregistrement (110) à mettre en cache, une indication de l'autorisation de mise en cache accordée (152), un identifiant d'utilisateur (154) de l'utilisateur accordant l'autorisation de mise en cache (152), un identifiant de base de données (156) de la deuxième base de données (120) à laquelle l'autorisation de mise en cache (152) est accordée,
l'autorisation (152) étant limitée à la mise en cache de l'enregistrement (110),
la preuve d'autorisation de mise en cache (132) étant signée par la première base de données (100) à l'aide d'une clé de signature de la première base de données (100), ladite clé de signature étant une clé cryptographique privée d'une paire de clés asymétriques de la première base de données (100), la signature de la preuve d'autorisation de mise en cache (132) pouvant être vérifiée à l'aide d'une clé de vérification de signature de la première base de données (100), ladite clé étant une clé cryptographique publique de la paire de clés asymétriques de la première base de données (100),
• la fourniture de la preuve d'autorisation de mise en cache (132) à la deuxième base de données (120),
le procédé comprenant en outre, sous réserve de la présence d'une preuve d'autorisation de mise en cache valide (132) de la deuxième base de données (120) pour la mise en cache d'une image (112) de l'enregistrement (110), la fourniture de l'image (112) de l'enregistrement (110) à la deuxième base de données (120), ladite fourniture comprenant:
• la création de l'image (112) de l'enregistrement (110) pour la mise en cache dans la deuxième base de données (120), l'image créée étant signée par la première base de données (100), l'image étant en outre associée à des métadonnées signées conjointement avec l'image par la première base de données (100), les métadonnées comprenant une structure d'autorisations de l'image (112),
• l'envoi de l'image créée (112) à la deuxième base de données (120) pour la mise en cache.

2. Procédé selon la revendication 1, dans lequel la fourniture de l'image (112) de l'enregistrement (110) à la deuxième base de données (120) s'effectue automatiquement après la fourniture de la preuve d'autorisation de mise en cache (132) à la deuxième base de données (120), ou
dans lequel la fourniture de l'image (112) de l'enregistrement (110) à la deuxième base de données (120) est effectuée en réponse à la réception d'une demande de la deuxième base de données (120) visant à obtenir une image (112) de l'enregistrement (110) pour la mise en cache dans la deuxième base de données (120),
le procédé comprenant en outre:
• la réception de la demande de la deuxième base de données (120) pour fournir une image (112) de l'enregistrement (110), la demande comprenant la preuve d'autorisation de mise en cache (132) de la deuxième base de données (120),
• la validation de la preuve d'autorisation de mise en cache (132) de la deuxième base de données (120),
• après validation réussie de la preuve d'autorisation de mise en cache (132), la fourniture de l'image (112) de l'enregistrement (110) pour la mise en cache dans la deuxième base de données (120),
la validation de la preuve d'autorisation de mise en cache (132) comprend, par exemple, une vérification de la structure d'autorisation (170) de l'enregistrement de données (110) pour déterminer si un droit de mise en cache pour accorder des autorisations de mise en cache (152) est entré dans la structure d'autorisation (170) de l'enregistrement de données (110) pour l'utilisateur qui, selon l'identifiant utilisateur (154) de la preuve de d'autorisation de mise en cache (132), accorde l'autorisation de mise en cache (152) de la deuxième base de données (120).

3. Procédé selon l'une quelconque des revendications précédentes, dans lequel la structure d'autorisations de la deuxième base de données (120) accorde un droit de lecture et/ou un droit de sélection pour l'image (112) de l'enregistrement (110),
ladite structure d'autorisations accordant en outre, par exemple, le droit de déléguer le droit de lecture et/ou le droit de sélection pour l'image (112) de l'enregistrement (110) à des utilisateurs de la deuxième base de données (120).

4. Procédé selon l'une quelconque des revendications précédentes, dans lequel les métadonnées comprennent en outre une indication d'une validité limitée dans le temps de l'image (112) de l'enregistrement (110).

5. Procédé selon l'une quelconque des revendications précédentes, dans lequel le procédé comprend en outre la mise à jour de l'image fournie (112) de l'enregistrement (110),
la mise à jour comprenant:
• la réception d'une demande de la deuxième base de données (120) visant à fournir une image mise à jour de l'enregistrement (110) par la première base de données (100), la demande comprenant la preuve d'autorisation de mise en cache (132) de la deuxième base de données (120),
• la validation de la preuve d'autorisation de mise en cache (132) de la deuxième base de données (120),
• après validation réussie, la création d'une image mise à jour de l'enregistrement (110) pour la mise en cache dans la deuxième base de données (120),
• l'envoi de l'image mise à jour à la deuxième base de données (120) pour la mise en cache,
l'image mise à jour de l'enregistrement (110) étant par exemple associée à une durée de validité prolongée.

6. Procédé selon l'une quelconque des revendications précédentes, dans lequel les deux bases de données (100, 120) font partie d'un système de bases de données distribué (101).

7. Procédé selon l'une quelconque des revendications précédentes, dans lequel les droits d'usage enregistrés dans la structure d'autorisations (170) de l'enregistrement (110) comprennent, outre un droit de mise en cache, un ou plusieurs des droits suivants: un droit de lecture, un droit d'écriture, un droit de sélection.

8. Procédé selon l'une quelconque des revendications précédentes, dans lequel la deuxième base de données (120) initie une structure d'autorisations de l'image (112) comprenant une chaîne d'autorisations hiérarchique,
ladite chaîne comprenant, pour chaque utilisateur de la deuxième base de données (120) auquel un droit d'usage de l'image (112) est accordé, une chaîne d'octroi dans laquelle, à partir de la première base de données (100) en tant que créateur de l'image (112) ou de la deuxième base de données (120) jusqu'à l'utilisateur disposant du droit d'usage correspondant, une séquence d'utilisateurs de la deuxième base de données (120) est enregistrée,
chaque utilisateur précédent ayant accordé le droit d'usage correspondant à l'utilisateur suivant dans ladite séquence,
les droits d'usage enregistrés dans la structure d'autorisations de l'image (112) comprenant par exemple un droit de lecture et/ou un droit de sélection.

9. Procédé selon l'une quelconque des revendications précédentes, dans lequel, en réponse à une demande de révocation de l'utilisateur de la première base de données (100) ayant accordé à la deuxième base de données (120) l'autorisation de mise en cache (152) pour la mise en cache de l'enregistrement (110),
l'autorisation de mise en cache (152) de la deuxième base de données (120) est révoquée et la preuve d'autorisation de mise en cache (132) de la deuxième base de données (120) est rejetée comme invalide,
et/ou
dans lequel, lors de la révocation du droit de mise en cache de l'utilisateur de la première base de données (100) ayant accordé ladite autorisation de mise en cache (152) à la deuxième base de données (120) pour la mise en cache de l'enregistrement (110), l'autorisation de mise en cache (152) de la deuxième base de données (120) est révoquée et la preuve d'autorisation de mise en cache (132) de la deuxième base de données (120) est rejeté comme invalide.

10. Base de données (100) comprenant un système de gestion de base de données (104), dans laquelle un enregistrement (110) géré par le système de gestion de base de données (104) est stocké dans une mémoire (108) de la base de données (100),
le système de gestion de base de données (104) étant configuré pour accorder à une autre base de données (120) une autorisation de mise en cache (152) pour la mise en cache d'une image (112) de l'enregistrement (110),
l'enregistrement (110) étant associé à une structure d'autorisations (170) dans laquelle sont enregistrés les utilisateurs de la base de données (100) disposant d'un droit de mise en cache permettant d'accorder des autorisations de mise en cache (152) pour la mise en cache d'images (112) de l'enregistrement (110),
l'octroi de l'autorisation de mise en cache (152) comprenant:
• la réception d'une demande d'un utilisateur de la base de données (100) visant à l'émission, par la base de données (100), d'une preuve d'autorisation de mise en cache (132) pour l'autre base de données (120), la demande étant signée à l'aide d'une clé cryptographique privée de l'utilisateur demandeur, la structure d'autorisations fournissant une clé cryptographique publique de l'utilisateur demandeur comme clé de vérification de signature de l'utilisateur demandeur, la preuve d'autorisation de mise en cache (132) attestant une autorisation de mise en cache (152) de l'autre base de données (120) pour mettre en cache une image (112) de l'enregistrement (110),
• la vérification de la structure d'autorisations (170) de l'enregistrement (110) afin de déterminer si un droit de mise en cache permettant d'accorder des autorisations de mise en cache (152) est enregistré dans ladite structure d'autorisations (170) pour l'utilisateur demandeur, la structure d'autorisations (170) de l'enregistrement (110) comprenant une chaîne d'autorisations hiérarchique sous la forme d'une chaîne de certificats ou d'une blockchain, ladite chaîne comprenant, pour chaque utilisateur de la base de données (100) disposant d'un droit d'usage de l'enregistrement (110), une chaîne d'octroi dans laquelle, à partir du créateur de l'enregistrement (110) jusqu'à l'utilisateur disposant du droit d'usage correspondant, une séquence d'utilisateurs de la base de données (100) est enregistrée, chaque utilisateur précédent ayant accordé le droit d'usage correspondant à l'utilisateur suivant dans ladite séquence,
• après vérification réussie, la création de la preuve d'autorisation de mise en cache (132) pour l'autre base de données (120), la preuve d'autorisation de mise en cache (132) comprenant : un identifiant d'enregistrement (150) de l'enregistrement (110) à mettre en cache, une indication de l'autorisation de mise en cache accordée (152), un identifiant d'utilisateur (154) de l'utilisateur accordant l'autorisation de mise en cache (152), un identifiant de base de données (156) de l'autre base de données (120) à laquelle l'autorisation de mise en cache (152) est accordée, l'autorisation (152) étant limitée à la mise en cache de l'enregistrement (110), la preuve d'autorisation de mise en cache (132) étant signée par la base de données (100) à l'aide d'une clé de signature de la base de données (100), ladite clé de signature étant une clé cryptographique privée d'une paire de clés asymétriques de la base de données (100), la signature de la preuve d'autorisation de mise en cache (132) pouvant être vérifiée à l'aide d'une clé de vérification de signature de la base de données (100), ladite clé étant une clé cryptographique publique de la paire de clés asymétriques de la base de données (100),
• la fourniture de la preuve d'autorisation de mise en cache (132) à l'autre base de données (120), le système de gestion de base de données (104) étant en outre configuré pour, sous réserve de la présence d'une preuve d'autorisation de mise en cache valide (132) de l'autre base de données (120) pour la mise en cache d'une image (112) de l'enregistrement (110), fournir l'image (112) de l'enregistrement (110) à l'autre base de données (120), ladite fourniture comprenant:
• la création de l'image (112) de l'enregistrement (110) pour la mise en cache dans l'autre base de données (120), l'image créée étant signée par la base de données (100), l'image étant en outre associée à des métadonnées signées conjointement avec l'image par la base de données (100), les métadonnées comprenant une structure d'autorisations de l'image (112),
• l'envoi de l'image créée (112) à l'autre base de données (120) pour la mise en cache.

11. Système de bases de données distribué (101) comprenant : une base de données (100) selon la revendication 10, et une autre base de données (120) selon la revendication 10, comprenant une mémoire supplémentaire (128) et un système de gestion de base de données (124), le système de gestion de base de données (124) étant configuré pour gérer des enregistrements (130) et des images (112) d'enregistrements (110) stockés dans ladite mémoire supplémentaire (128).
